# EUROPEAN PATENT SPECIFICATION

(11) **EP 3 636 524 B1**
(45) Date of publication and mention of the grant of the patent: **23.02.2022**
(21) Application number: 19201851.3
(22) Date of filing: 08.10.2019
(51) Int. Cl.: B62J 9/14, B62J 1/12, B62J 17/00, B62K 11/04

(54) **STRADDLED VEHICLE**
GRÄTSCHSITZFAHRZEUG
VÉHICULE À ENFOURCHER

(30) Priority: 11.10.2018 JP 2018192538
(43) Date of publication of application: 15.04.2020
(73) Proprietor: YAMAHA HATSUDOKI KABUSHIKI KAISHA, Iwata-shi, Shizuoka 438-8501 (JP)
(72) Inventor: TSUJIMURA, Yukito, Iwata-shi, Shizuoka 438-8501 (JP)
(74) Representative: Grünecker Patent- und Rechtsanwälte PartG mbB

(56) References cited:
- EP-A1- 1 939 077
- EP-A1- 2 703 273
- JP-A- 2009 154 849

## Description

The present invention relates to a straddled vehicle. Prior art document EP 1 939 077 A1 illustrates a straddled vehicle comprising a storage box that defines a storage space in which an article is to be disposed. A seat is disposed above the storage box in an up-down direction of the vehicle and opens and closes an opening provided in an upper end of the storage space by turning upward and downward with respect to the storage box. A frame includes a pair of rear frames that are disposed on a right side and a left side of the storage box in a right-left direction of the vehicle, respectively and a mount bracket that protrudes upward from one of the pair of rear frames in the up-down direction of the vehicle and supports the storage box. The storage box includes a tubular portion that surrounds the storage space, a flange portion that protrudes from an outer circumferential surface of the tubular portion and a mount portion that extends downward from the flange portion in the up-down direction of the vehicle and is disposed on the mount bracket. The seat comprises a front seat and a rear seat disposed rearward of the front seat and a rear spoiler is disposed to surround the rear seat. The figures of said prior art shows that the rear spoiler includes a pair of through holes that penetrates the rear spoiler in the up-down direction of the vehicle, and the mount portion is disposed inside of the through hole, respectively.

JP 2012144131 A discloses a scooter that is an example of a straddled vehicle. The scooter includes a storage box that is opened and closed by a seat, and a rear frame that is disposed outward of the storage box in a vehicle width direction. The width of the storage box decreases step by step as the bottom of the storage box is approached. An upper portion of a side wall of the storage box is disposed more outward than a lower portion of the side wall of the storage box in the vehicle width direction, and a step portion of the side wall extends outward in the vehicle width direction from an upper end portion of the lower portion of the side wall to a lower end portion of the upper portion of the side wall. The step portion of the side wall overlaps the rear frame in a plan view and is placed on the rear frame.

JP 2009154849 A also discloses a scooter that is an example of the straddled vehicle, said straddled vehicle comprising the features of the preamble of claim 1.

The scooter includes a storage box that is opened and closed by a seat, a rear frame that is disposed outward of the storage box in a vehicle width direction and an exterior cover that is disposed outward of the storage box and the rear frame in the vehicle width direction.

The storage box includes a flange that protrudes outward in the vehicle width direction from the upper end portion of the storage box. The flange of the storage box is disposed on a supporting bracket that protrudes upward from the rear frame. FIG. 5 of JP 2009154849 A shows that the flange of the storage box has a plate-shaped configuration that is thin in the up-down direction and the supporting bracket is disposed laterally of the storage box. FIG. 1 of JP 2009154849 A shows that the rear frame and the supporting bracket overlap the storage box in a side view of the scooter.

In the scooter disclosed in JP 2012144131 A, the lower portion of the side wall of the storage box is recessed inward in the vehicle width direction in order to make the rear frame support the side wall of the storage box. Thus, the capacity of the storage box decreases. In the scooter disclosed in JP 2009154849 A, not the side wall of the storage box, but the flange of the storage box is supported by the supporting bracket, and thus the lower portion of the side wall of the storage box does not need to be recessed inward in the vehicle width direction.

Meanwhile, In the scooter disclosed in JP 2009154849 A, the flange of the storage box is supported by the supporting bracket at substantially the same height as an opening of the storage box and the upper end of the supporting bracket is disposed at substantially the same height as the opening of the storage box. Thus, the supporting bracket limits the length of the opening of the storage box in the vehicle width direction. Enlarging the opening of the storage box in the vehicle width direction so as to make it easier to take an article into and from the storage box is prevented by the supporting bracket. Further, since the supporting bracket is disposed laterally of the storage box, moving the side wall of the storage box outward in the vehicle width direction so as to increase the capacity of the storage box is prevented by the supporting bracket. When the rear frame and the supporting bracket are moved outward in the vehicle width direction, the opening of the storage box and the entirety of the storage box can be enlarged in the vehicle width direction. However, moving the rear frame and the supporting bracket outward in the vehicle width direction enlarges the width of the entire scooter.

Thus, an object of the present invention is to provide a straddled vehicle that is able to enlarge an opening of a storage box in a vehicle width direction while preventing or minimizing an increase in the overall width (maximum width dimension) and to increase the capacity of the storage box. The present object is achieved by a straddled vehicle according to claim 1. Preferred embodiments are laid down in the dependent claims. With the straddled vehicle according to claim 1, it is possible to provide a straddled vehicle that is able to enlarge an opening of a storage box in a vehicle width direction while preventing or minimizing an increase in the overall width (maximum width dimension) and to increase the capacity of the storage box. Specifically, with the above arrangement, the rear frame of the frame is disposed outward of the storage box in the vehicle width direction and overlaps the storage box in a side view of the vehicle. The rear side cover is disposed outward of the rear frame in the vehicle width direction and overlaps the storage box and the rear frame in a side view of the vehicle. The storage box includes the tubular portion surrounding the storage space in which an article is disposed, the flange portion protruding from the outer circumferential surface of the tubular portion and the mount portion extending downward from the flange portion. The mount portion of the storage box is supported by the mount bracket protruding upward from the rear frame.

In this way, the mount bracket of the frame does not support the flange portion of the storage box directly, but supports the flange portion via the mount portion of the storage box extending downward from the flange portion. There is the mount portion between the flange portion and the mount bracket, and thus the upper end of the mount bracket moves downward with respect to the opening of the storage box. Thus, the width of the opening of the storage box is unlikely to be limited by the mount bracket. Further, the position of the upper end of the mount bracket lowers, and thus the width of the upper end portion of the storage box is unlikely to be limited by the mount bracket. Thus, the opening of the storage box can be enlarged in the vehicle width direction and the capacity of the storage box can be increased.

Further, the mount portion of the storage box is disposed in the notch of the rear side cover in a plan view of the vehicle. The notch of the rear side cover penetrates the upper end portion of the rear side cover in the up-down direction and is recessed outward in the vehicle width direction in a plan view of the vehicle. In a case where the notch is not provided in the rear side cover, the upper end portion of the rear side cover needs to be disposed laterally of the mount portion of the storage box. In this case, the width of the straddled vehicle increases at a position where the mount portion is provided. Thus, it is possible to enlarge the opening of the storage box in the vehicle width direction while preventing or minimizing an increase in the width of the entire straddled vehicle and to increase the capacity of the storage box by providing the notch that houses the mount portion.

As long as the upper end portion of the rear side cover overlaps the flange portion of the storage box in a plan view, the upper end portion of the rear side cover may be disposed above the flange portion of the storage box, or may be disposed under the flange portion of the storage box. As long as at least a portion of the mount portion is disposed in the notch in a plan view of the vehicle, the mount portion may be inserted in the notch, or may not be inserted in the notch. In the latter case, the upper end of the mount portion may be disposed lower than the notch.

In the present preferred embodiment, at least one of the following features may be added to the above straddled vehicle.

The mount portion of the storage box is longer than the mount bracket of the frame in the up-down direction.

With the above arrangement, the mount portion of the storage box is long in the up-down direction and the mount bracket of the frame is short in the up-down direction. That is, the maximum value of the length of the mount portion in the up-down direction is greater than the maximum value of the length of the mount bracket in the up-down direction. When the mount bracket is short in the up-down direction, the position of the upper end of the mount bracket further lowers. It shortens in the up-down direction a range where the mount bracket limits the width of the storage box. Thus, the capacity of the storage box can be further increased.

The frame further includes a rear cross member that extends from the one of the pair of rear frames to the other of the pair of rear frames and that is disposed behind the storage box, and the mount portion of the storage box includes a lower end that is disposed lower than the rear cross member.

With the above arrangement, the rear cross member of the frame is disposed behind the storage box. The lower end of the mount portion of the storage box is disposed lower than the lower end of the rear cross member. When the position of the lower end of the mount portion lowers, the position of the upper end of the mount bracket also lowers. Thus, a range where the mount bracket limits the width of the storage box shortens in the up-down direction, and thus the capacity of the storage box can be further increased.

The opening of the storage box includes an outer region that is disposed more outward than an inner edge of the rear frame in the vehicle width direction in a plan view of the vehicle, and the outer region includes a side portion that is disposed at a position more rearward than a front end of the mount bracket and more forward than a rear end of the mount bracket in a plan view of the vehicle. The outer region may further include a rear portion that is disposed more rearward than the rear end of the mount bracket in a plan view of the vehicle.

With the above arrangement, the opening of the storage box is enlarged in the vehicle width direction so as to overlap the rear frame in a plan view of the vehicle. That is, the opening of the storage box includes the outer region that is disposed more outward than the inner edge of the rear frame in the vehicle width direction, and this outer region overlaps the rear frame in a plan view of the vehicle. Thus, it is possible to enlarge the width of the opening of the storage box and to make it easier to take an article into and from the storage box.

Further, the opening of the storage box is not merely enlarged in the vehicle width direction, but is enlarged in the vehicle width direction at a bracket installation position, i.e., a position that passes though the mount bracket in a plan view of the vehicle. Specifically, the outer region includes the side portion that is disposed at a position more rearward than the front end of the mount bracket and more forward than the rear end of the mount bracket in a plan view of the vehicle.

In the conventional straddled vehicle described above, the upper end of the supporting bracket is disposed at substantially the same height as the opening of the storage box, and thus the width of the opening of the storage box is unable to be enlarged at the bracket installation position. In the arrangement according to the preferred embodiment, there is the mount portion between the flange portion and the mount bracket and the position of the upper end of the mount bracket is lowered, so that the width of the opening of the storage box is unlikely to be limited by the mount bracket. Thus, the opening of the storage box can be enlarged at the bracket installation position and the side portion can be provided in the opening of the storage box. Accordingly, it is possible to make it easier to take an article into and from the storage box.

The opening of the storage box includes an outer region that is disposed more outward than an inner edge of the rear frame in the vehicle width direction in a plan view of the vehicle, and the outer region includes a rear portion that is disposed more rearward than a rear end of the mount bracket in a plan view of the vehicle.

With the above arrangement, the outer region is included in the opening of the storage box and disposed more outward than the inner edge of the rear frame in the vehicle width direction. Further, the gap between the pair of rear frames normally narrows at the rear portion of the rear frame in the vehicle width direction, so that the width of the opening of the storage box also narrows at the rear portion of the rear frame. Nevertheless, the outer region includes the rear portion that is disposed more rearward than the rear end of the mount bracket in a plan view of the vehicle. Thus, it is possible to maintain the width of the opening of the storage box even at the rear portion of the rear frame and to keep the convenience of users to take an article into and from the storage box.

The upper end portion of the rear side cover is disposed under the storage box such that the storage box is attached to and removed from the frame while the rear side cover is attached to the frame.

With the above arrangement, the upper end portion of the rear side cover is disposed under the storage box. Thus, when the storage box is moved upward, the upper end portion of the rear side cover does not come into contact with the storage box. Accordingly, the storage box can be removed from the frame while the rear side cover is attached to the frame. Further, when the storage box is moved downward at a space above the upper end portion of the rear side cover, the storage box is attached to the frame while the rear side cover is attached to the frame. Thus, the storage box is easily attached and removed when manufacturing, maintaining and repairing the straddled vehicle.

A gap between the notch of the rear side cover and the mount portion of the storage box is narrower than a length of the mount portion in the up-down direction.

With the above arrangement, the outer surface of the mount portion of the storage box is disposed close to the inner surface of the notch of the rear side cover. The gap between the notch of the rear side cover and the mount portion of the storage box is narrower than the length of the mount portion in the up-down direction. Since the gap between the notch and the mount portion is narrow, the outer surface of the mount portion is guided in the up-down direction by the inner surface of the notch when attaching and removing the storage box. Thus, the storage box can be easily attached and removed.

Additionally, since the length of the mount portion in the up-down direction is greater than the gap between the notch and the mount portion is long in the up-down direction, the position of the upper end of the mount bracket supporting the mount portion of the storage box is further lowered. Thus, a range where the mount bracket limits the width of the storage box shortens in the up-down direction, and thus the capacity of the storage box can be further increased.

The flange portion of the storage box includes a pedestal portion that comes into contact with the seat, and the mount portion of the storage box extends downward from the pedestal portion.

With the above arrangement, the pedestal portion is provided in the flange portion of the storage box and comes into contact with the seat. Load in a down direction applied to the seat is transmitted from the seat to the pedestal portion, and transmitted from the pedestal portion to the mount portion. Further, this load is transmitted to the mount bracket supporting the mount portion. Thus, load in the down direction applied to the seat can be efficiently transmitted to the frame.

The pedestal portion, the mount portion and the mount bracket overlap each other in a plan view of the vehicle.

With the above arrangement, the pedestal portion provided in the flange portion of the storage box is disposed above the mount portion of the storage box and the mount portion is disposed above the mount bracket. Load in the down direction applied to the seat is applied to the pedestal portion, which is in contact with the seat, and transmitted from the pedestal portion to the mount portion. The pedestal portion, the mount portion and the mount bracket overlap each other in a plan view of the vehicle. Thus, load in the down direction applied to the seat can be efficiently transmitted to the frame while preventing an increase in bending moment that is generated in the pedestal portion, the mount portion and the mount bracket.

The upper end portion of the rear side cover includes a fastened portion that is fastened to the flange portion of the storage box.

With the above arrangement, the upper end portion of the rear side cover not only overlaps the flange portion of the storage box in a plan view of the vehicle, but also is fixed to the flange portion. That is, the upper end portion of the rear side cove includes the fastened portion that is fastened to the flange portion of the storage box. In this way, since a portion of the upper end portion of the rear side cover in which the notch is not provided is fixed to the storage box, vibrations of the rear side cover generated while the straddled vehicle is traveling are reduced.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1A is a left side view of a straddled vehicle according to a preferred embodiment.
FIG. 1B is a left side view where dashed lines showing a frame are added to FIG. 1A.
FIG. 2 is a plan view of the straddled vehicle.
FIG. 3 is a perspective view of a seat and a storage box.
FIG. 4 is a cross-sectional view showing vertical cross sections of the seat and the storage box taken along line IV-IV shown in FIG. 2.
FIG. 5 is a left side view showing the storage box and the frame.
FIG. 6A is a plan view showing the storage box and the frame.
FIG. 6B is a plan view where dashed lines showing rear frames and a rear cross member are added to FIG. 6A.
FIG. 7 is an exploded perspective view showing the seat, the storage box, the frame and a rear side cover.
FIG. 8A is a plan view showing the storage box and the rear side cover.
FIG. 8B is a plan view showing the frame and the rear side cover.
FIG. 9 is a left side view showing a mount portion of the storage box and a mount bracket of the frame.
FIG. 10 is an enlarged view of a portion of FIG. 9.
FIG. 11 is a cross-sectional view showing vertical cross sections of the storage box, the frame and the rear side cover taken along line XI-XI shown in FIG. 8A.
FIG. 12 is a cross-sectional view showing vertical cross sections of the storage box, the frame and the rear side cover taken along line XII-XII shown in FIG. 8A.
FIG. 13A is an enlarged view of a portion of FIG. 8A.
FIG. 13B is an enlarged view of a portion of FIG. 8B.

### DETAILED DESCRIPTION OF THE PREFERRED EMBODIMENTS

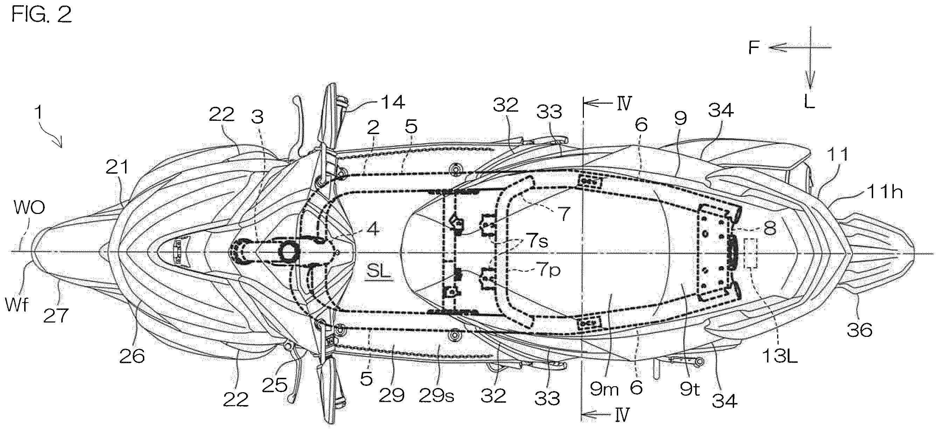

A straddled vehicle 1 placed on a horizontal road surface in a reference posture will be hereinafter described unless specific notice is given. The reference posture is a posture in which a steering handle 14 is disposed at a straight-traveling position (position shown in FIG. 2) at which the straddled vehicle 1 travels straight and a rotational center of a rear wheel Wr is horizontal. Front-rear, up-down, and right-left directions are defined based on the straddled vehicle 1 in the reference posture. The right-left direction corresponds to a vehicle width direction. A vehicle center WO corresponds to a vertical plane that passes through a center line of a head pipe 3 and that is perpendicular to the rotational center of the rear wheel Wr.

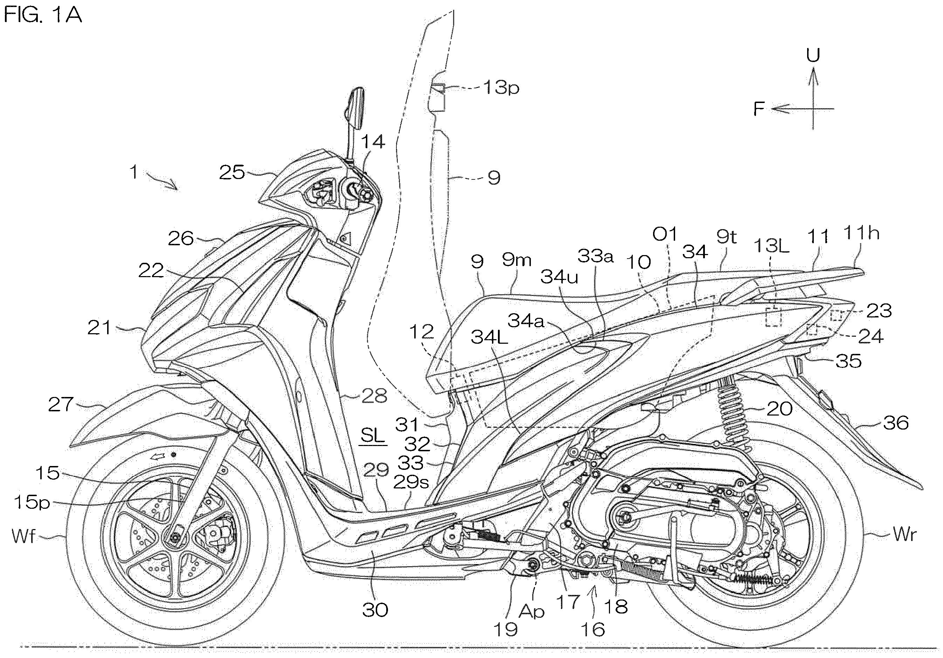

"U" and "F" in FIG 1A represent an upper direction and a front direction of the straddled vehicle 1, respectively. "L" in FIG 2 represents a left direction of the straddled vehicle 1. The same applies to other figures. A plan view and a side view mean a plan view and a side view of the straddled vehicle 1, respectively unless specific notice is given. In the following description, the seat 9 is disposed at a closed position (position shown by the solid line in FIG. 1A) unless specific notice is given.

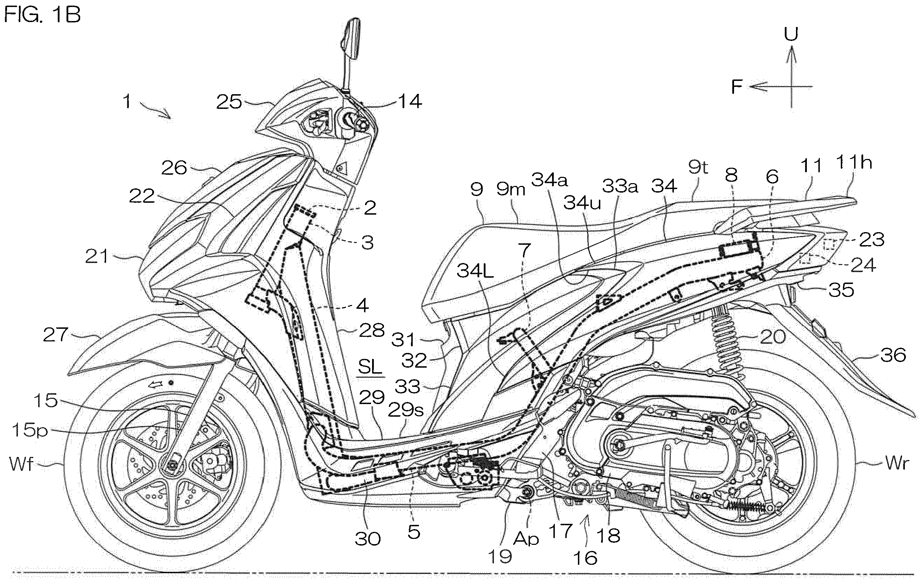

FIG. 1A is a left side view of the straddled vehicle 1 according to a preferred embodiment. FIG. 1B is a left side view where dashed lines showing a frame 2 are added to FIG. 1A. FIG. 2 is a plan view of the straddled vehicle 1.

As shown in FIG. 1A, the straddled vehicle 1 is a scooter, for example. As shown in FIG. 1B, the straddled vehicle 1 includes the frame 2 covered with an exterior cover. The frame 2 includes a head pipe 3 that extends obliquely rearward and upward, a down frame 4 that extends obliquely rearward and downward from the head pipe 3.

As shown in FIG. 2, the frame 2 includes a pair of lower frames 5 that spread from the down frame 4 in the vehicle width direction. As shown in FIG. 1B, the frame 2 further includes a pair of rear frames 6 that extends obliquely rearward and upward from the rear end portions of the pair of lower frames 5. The pair of lower frames 5 overlap each other in a side view. The pair of rear frames 6 also overlap each other in a side view. The front end portion of the lower frame 5 is disposed lower than the head pipe 3 and fixed to the down frame 4.

As shown in FIG. 2, the frame 2 includes a front cross member 7 extending from one rear frame 6 to the other rear frame 6 and a rear cross member 8 disposed more rearward than the front cross member 7 and extending from one rear frame 6 to the other rear frame 6. FIG. 2 shows an example where the front cross member 7 includes a pipe extending in the vehicle width direction, and the rear cross member 8 includes a plate extending in the vehicle width direction. In this example, the front cross member 7 includes a cross pipe 7p extending from one rear frame 6 to the other rear frame 6 and two stays 7s extending forward from the cross pipe 7p.

As shown in FIG. 1A, the straddled vehicle 1 includes a saddle type seat 9 on which a rider sits. FIG. 1A shows an example where the seat 9 is provided with a main seat 9m on which a rider sits, and a tandem seat 9t on which a passenger sits. The seat 9 may be for one person. The seat 9 is disposed behind the head pipe 3. The seat 9 is disposed above the pair of rear frames 6 and overlaps the pair of rear frames 6 in a plan view. The seat 9 may be supported directly by the frame 2 or may be supported indirectly by the frame 2.

A rear handle 11 of the straddled vehicle 1 overlaps the rear portion of the seat 9 in a side view. As shown in FIG. 2, the rear handle 11 includes a handle portion 11h having a U-shaped configuration that opens forward in a plan view. The handle portion 11h includes a rear portion disposed behind the seat 9 in a plan view and a pair of side portions disposed in a plan view on the right side and the left side of the seat 9, respectively. The handle portion 11h is to be gripped by a passenger sitting on the seat 9 or a user standing on the side of the straddled vehicle 1.

As shown in FIG. 1A, the straddled vehicle 1 includes a storage box 10 that houses an article such as a helmet. The storage box 10 is disposed under the seat 9. The seat 9 is connected to the storage box 10 via a hinge 12. FIG. 1A shows an example where the front end portion of the seat 9 is connected to the storage box 10 via the hinge 12. The seat 9 is turnable upward and downward with respect to the storage box 10. An opening O1 provided in the upper end portion of the storage box 10 is opened and closed by the seat 9.

The seat 9 is turnable upward and downward between an open position (position shown by the alternate long and two short dashed line in FIG. 1A) at which the opening O1 of the storage box 10 is opened and the closed position (position shown by the solid line in FIG. 1A) at which the opening O1 of the storage box 10 is closed by the seat 9. The straddled vehicle 1 includes a seat lock device that locks the seat 9 at the closed position. The seat lock device includes a pusher 13p that moves upward and downward together with the seat 9 and a lock unit 13L that holds the pusher 13p to restrict the movement of the seat 9. The pusher 13p is attached to the seat 9 and the lock unit 13L is attached to the frame 2. The lock unit 13L is disposed inside of the straddled vehicle 1.

The pusher 13p moves between the open position and the closed position together with the seat 9. The pusher 13p protrudes downward from the rear end portion of the seat 9. When the seat 9 is lowered toward the closed position, the pusher 13p comes into contact with the lock unit 13L and is pressed downward against the lock unit 13L. This causes the pusher 13p to be held on a hook included in the lock unit 13L and thus the seat 9 to be locked at the closed position. When a rider operates an unlock device in this state, holding the pusher 13p by the lock unit 13L is released and thus the seat 9 is unlocked.

The straddled vehicle 1 includes the steering handle 14 to be steered by a rider and a front fork 15 rotatably supporting a front wheel Wf. The front fork 15, which is an example of a front wheel supporting member, includes a pair of fork pipes 15p disposed on the right side and the left side of the front wheel Wf, respectively, and a steering shaft inserted into the head pipe 3. The steering shaft protrudes upward from the upper end portion of the head pipe 3. The steering handle 14 is connected to the upper end portion of the steering shaft. The steering handle 14 is disposed above the head pipe 3. When the steering handle 14 is steered, the front wheel Wf turns around the center line of the head pipe 3 together with the steering handle 14 and the front fork 15.

The straddled vehicle 1 includes a power unit 16 to rotate the rear wheel Wr corresponding to a drive wheel. The power unit 16 includes an engine 17 that generates power to cause the straddled vehicle 1 to travel, and a drive mechanism 18 that transmits the power of the engine 17 to the rear wheel Wr. The engine 17 is an example of a prime mover. The prime mover may be an electric motor. In a case where the prime mover is the engine 17, the straddled vehicle 1 includes a fuel tank to store fuel to be supplied to the engine 17. The fuel tank is disposed under a footboard 29 described below. The pair of lower frames 5 are disposed on the right side and the left side of the fuel tank, respectively.

FIG. 1A shows an example where the power unit 16 is a swing unit that is swingable upward and downward relative to the frame 2. In the case of this example, the power unit 16 is mounted to the frame 2 via a link mechanism 19. The rear wheel Wr is rotatably supported by the rear end portion of the power unit 16. The rear wheel Wr and the power unit 16 are swingable upward and downward relative to the frame 2 around a horizontal pivot axis Ap passing through the link mechanism 19 in the vehicle width direction. The upper end portion of a rear cushion 20 is mounted to the frame 2, and the lower end portion of the rear cushion 20 is mounted to the rear end portion of the power unit 16.

The straddled vehicle 1 includes a head lamp 21 that emits light forward, and two front flashers 22 that flash in response to an operation by a rider. The straddled vehicle 1 further includes a tail lamp 23 that emits light rearward, and two rear flashers 24 that flash in response to an operation by a rider. FIG. 1A shows an example where the tail lamp 23 and the rear flashers 24 are included in a rear lamp unit. The head lamp 21 and the front flashers 22 are disposed more forward than the seat 9. The tail lamp 23 and the rear flashers 24 are disposed more rearward than the front end of the rear wheel Wr.

The exterior cover of the straddled vehicle 1 includes a handle cover 25 that is disposed in front of and behind the steering handle 14, a front cover 26 disposed in front of the head pipe 3, and a leg shield 28 disposed behind the head pipe 3. The leg shield 28 is disposed between the head pipe 3 and the seat 9 in the front-rear direction. The seat 9 is disposed behind the leg shield 28. The handle cover 25 is turns rightward and leftward together with the steering handle 14. A front fender 27 of the exterior cover turns rightward and leftward together with the front wheel Wf. The front fender 27 is disposed above the front wheel Wf. The leg shield 28 is disposed between the head pipe 3 and the seat 9 in the front-rear direction. The seat 9 is disposed behind the leg shield 28.

The exterior cover includes the footboard 29 disposed above the pair of lower frames 5, a pair of lower side covers 30 disposed on the right side and the left side of the pair of lower frames 5, respectively, and a middle center cover 31 extending upward from the rear edge of the footboard 29. The middle center cover 31 is disposed under the seat 9. The middle center cover 31 is disposed behind the leg shield 28. The exterior cover defines a leg space SL, in which the feet and legs of a rider sitting on the seat 9 are accommodated, between the leg shield 28 and the middle center cover 31 in the front-rear direction.

The feet of a rider sitting on the seat 9 are placed on a flat surface 29s provided in the upper surface of the footboard 29. As shown in FIG. 2, the flat surface 29s intersects the vehicle center WO in a plan view. The flat surface 29s may be a completely flat surface without any recesses or projections or may be a substantially flat surface provided with recesses or projections that will not obstruct the placing of feet (for example, recesses or projection of approximately 1 to 2cm). When the feet of a rider sitting on the seat 9 are placed on the flat surface 29s, the legs of the rider are disposed behind the leg shield 28. The legs of the rider and the rear surface of the leg shield 28 directly face each other in the front-rear direction.

As shown in FIG. 1A, the exterior cover includes a pair of rear side covers 32 disposed on the right side and the left side of the pair of rear frames 6, respectively, and a rear center cover 35 disposed between the pair of rear side covers 32. The rear side cover 32 is disposed under the seat 9 in a side view. A rear fender 36 of the exterior cover extends obliquely rearward and downward from the rear center cover 35 in a side view. The rear fender 36 is disposed above and behind the rear wheel Wr.

The pair of rear side covers 32 are disposed on the right side and the left side of the storage box 10, respectively. The rear side cover 32 overlaps the storage box 10 in a side view. The rear frame 6 is disposed between the storage box 10 and the rear side cover 32 in the vehicle width direction. Thus, as shown in FIG. 1B, the rear side cover 32 also overlaps the rear frame 6 in a side view. The rear side cover 32 is disposed outward of the rear frame 6 in the vehicle width direction.

FIG. 1A and FIG. 1B show an example where the rear side cover 32 includes a first side cover 33 and a second side cover 34. The second side cover 34 is a member that is separate from the first side cover 33 and connected to the first side cover 33. The second side cover 34 may be integral with the first side cover 33. That is, the rear side cover 32 may be a single, integral member that includes portions corresponding to the first side cover 33 and the second side cover 34.

As shown in FIG. 1A and FIG. 1B, each of the first side cover 33 and the second side cover 34 is disposed under the seat 9 in a side view. The first side cover 33 overlaps the storage box 10 in a side view, and the second side cover 34 overlaps the storage box 10 and the rear frame 6 in a side view. The first side cover 33 is disposed in front of the second side cover 34 in a side view. The first side cover 33 extends upward from the rear edge of the footboard 29 in a side view. The middle center cover 31 is disposed between the pair of first side covers 33 in the vehicle width direction.

As shown in FIG. 1A, the rear edge of the first side cover 33 defines a convex portion 33a having a V-shaped configuration that is tapered toward the rear end of the first side cover 33 in a side view. The front edge of the second side cover 34 defines a concave portion 34a having a V-shaped configuration that is open forward. The convex portion 33a of the first side cover 33 is disposed in the concave portion 34a of the second side cover 34. The concave portion 34a of the second side cover 34 includes an upper portion 34u disposed above the convex portion 33a in a side view and a lower portion 34L disposed under the convex portion 33a in a side view.

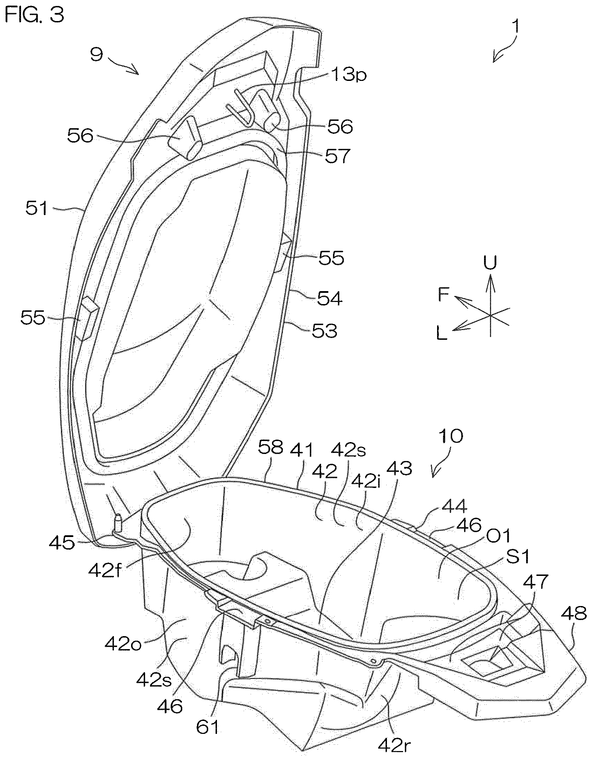

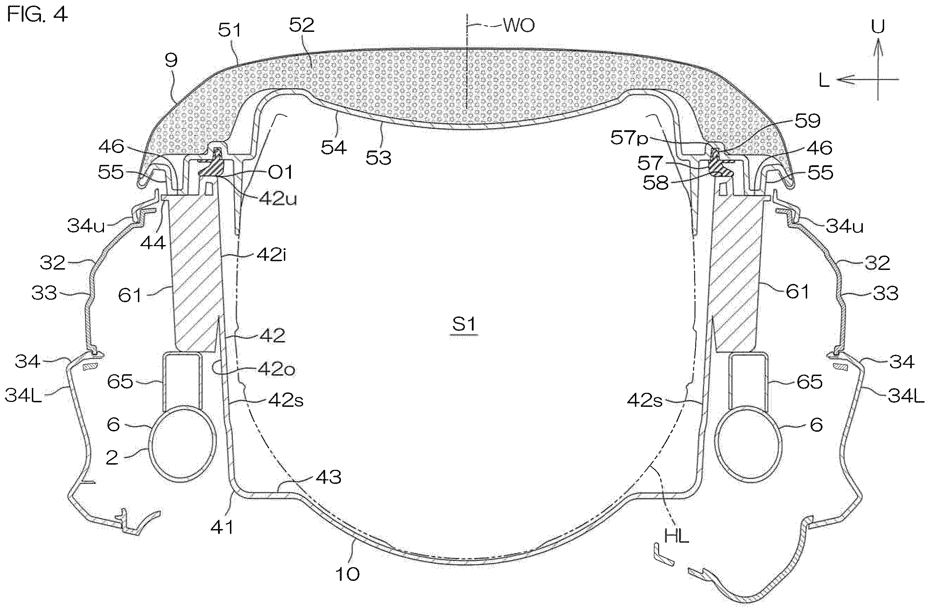

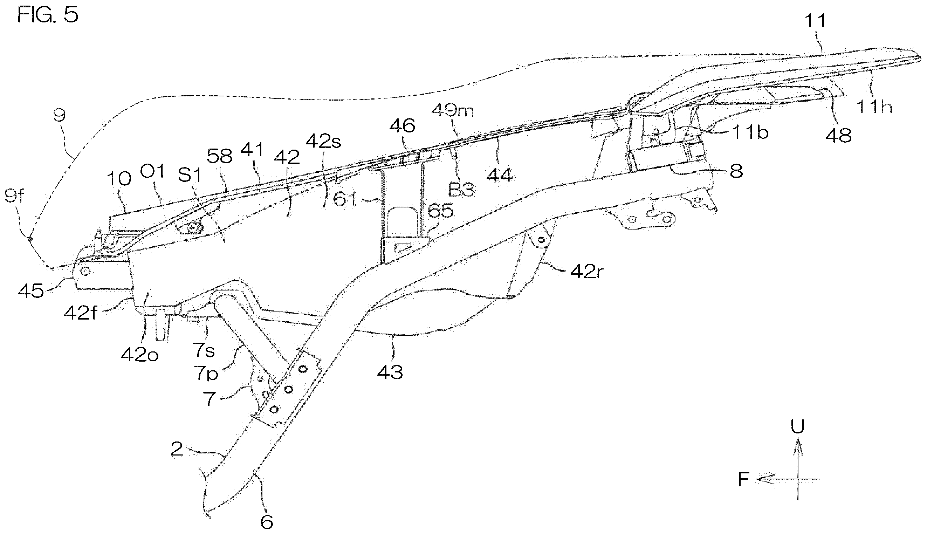

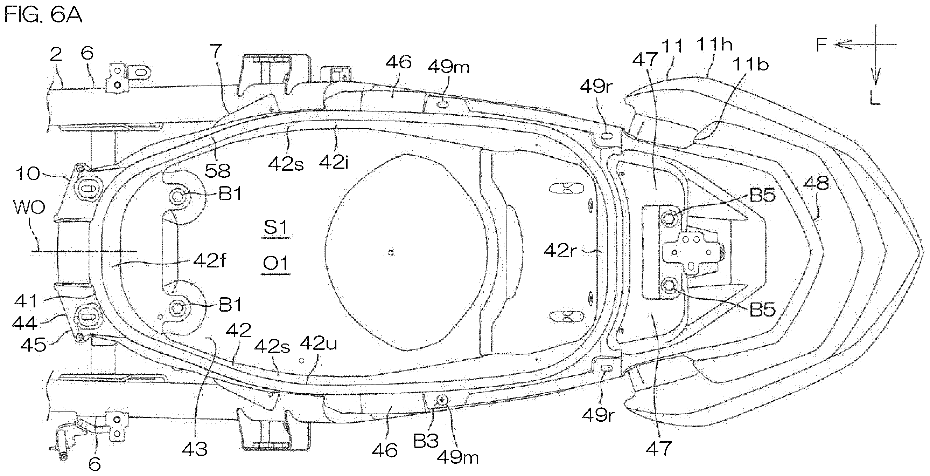

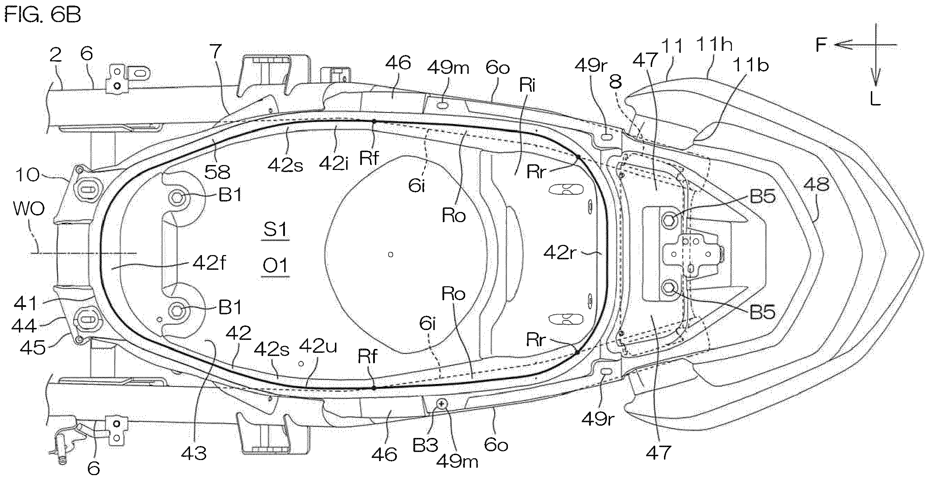

FIG. 3 is a perspective view of the seat 9 and the storage box 10. FIG. 4 is a cross-sectional view showing vertical cross sections of the seat 9 and the storage box 10 taken along line IV-IV shown in FIG. 2. FIG. 5 is a left side view showing the storage box 10 and the frame 2. FIG. 6A is a plan view showing the storage box 10 and the frame 2. FIG. 6B is a plan view where dashed lines showing rear frames 6 and the rear cross member 8 are added to FIG. 6A.

As shown in FIG. 3, the storage box 10 includes a main body 41 that defines a storage space S1 which houses an article such as a helmet. FIG. 4 shows an example where a full-face-type helmet HL is disposed in the storage space S1. The main body 41 includes a tubular portion 42 surrounding the storage space S1 and a bottom portion 43 disposed under the storage space S1. The tubular portion 42 extends upward from the outer edge of the bottom portion 43. The bottom of the tubular portion 42 is closed by the bottom portion 43.

As shown in FIG. 6A, the tubular portion 42 includes a front wall 42f disposed in front of the storage space S1, a rear wall 42r disposed behind the storage space S1 and a pair of side walls 42s disposed on the right side and the left side of the storage space S1. The front wall 42f and the rear wall 42r face each other across an interval in the front-rear direction. The pair of side walls 42s face each other across an interval in the vehicle width direction. The pair of side walls 42s are disposed on the right side and the left side of the vehicle center WO, respectively.

As shown in FIG. 5, the front cross member 7 and the rear cross member 8 disposed more rearward than the front end 9f of the seat 9 in a side view. The tubular portion 42 of the storage box 10 is disposed above the front cross member 7 and overlaps the front cross member 7 in a plan view. The rear cross member 8 is disposed behind the tubular portion 42. The tubular portion 42 overlaps the rear frame 6 in a side view. As shown in FIG. 6B, the tubular portion 42 also overlaps the rear frame 6 in a plan view. In other words, the storage box 10 is enlarged in the vehicle width direction so that a portion of the tubular portion 42 overlaps the rear frame 6 in a plan view. Thus, the capacity of the storage box 10, i.e., the volume of the storage space S1 is increased.

The upper end of the storage space S1 corresponds to the opening O1 of the storage box 10. The thick line in FIG. 6B represents an annular upper edge 42u of the inner circumferential surface 42i of the tubular portion 42. The opening O1 of the storage box 10 is defined by the upper edge 42u of the inner circumferential surface 42i of the tubular portion 42 the outer edge of the opening O1 of the storage box 10 corresponds to the upper edge 42u of the inner circumferential surface 42i of the tubular portion 42. The opening O1 of the storage box 10 is located at the same height as the upper edge 42u of the inner circumferential surface 42i of the tubular portion 42.

As shown in FIG. 6B, the opening O1 of the storage box 10 includes an inner region Ri disposed between the inner edges 6i of the pair of rear frames 6 in the vehicle width direction in a plan view and at least one of outer regions Ro disposed more outward than the inner edge 6i of the rear frame 6 in the vehicle width direction in a plan view. FIG. 6B shows an example where two outer regions Ro are disposed on the right side and the left side of the inner region Ri, respectively. The outer region Ro is disposed above the tubular portion 42 of the storage box 10 and overlaps the side wall 42s of the tubular portion 42 in a plan view. Any portion of the outer region Ro is disposed more inward than the outer edge 6o of the rear frame 6 in in a plan view.

The outer edge (the thick line in FIG. 6B) of the opening O1 of the storage box 10 intersects the inner edge 6i of the rear frame 6 at two intersection points in a plan view. The two intersection points are spaced in the front-rear direction. The intersection point on the front side corresponds to the front end Rf of the outer region Ro. The intersection point on the rear side corresponds to the rear end Rr of the outer region Ro. The front end Rf of the outer region Ro is disposed more outward than the rear end Rr of the outer region Ro in the vehicle width direction. The front end Rf and the rear end Rr of the outer region Ro are disposed between the front cross member 7 and the rear cross member 8 in the front-rear direction in a plan view.

As shown in FIG. 3, the storage box 10 includes, in addition to the main body 41, a flange portion 44 that protrudes from the outer circumferential surface 42o of the tubular portion 42. The flange portion 44 is disposed outside of the tubular portion 42. The flange portion 44 extends in the circumferential direction of the tubular portion 42 along the outer circumferential surface 42o of the tubular portion 42. The flange portion 44 may have an annular configuration that is continuous over the whole circumference of the tubular portion 42, or may have a configuration that is discontinuous in the circumferential direction of the tubular portion 42.

The flange portion 44 of the storage box 10 includes a front panel 45 that extends forward from the outer circumferential surface 42o of the tubular portion 42 and a rear panel 48 that extends rearward from the outer circumferential surface 42o of the tubular portion 42. As shown in FIG. 5, the front panel 45 is disposed at a position that is more forward than the rear panel 48 and lower than the rear panel 48. The front panel 45 is disposed at a position that is more forward than the front cross member 7 and higher than the front cross member 7. The seat 9 is attached to the front panel 45 via the hinge 12 (refer to FIG. 1A).

As shown in FIG. 4, the seat 9 includes a seat cover 51 that comes into contact with human buttocks, a sponge-like cushion 52 that is covered with the seat cover 51 and a bottom plate 53 that supports the cushion 52. The cushion 52 is disposed on the bottom plate 53. The seat cover 51 is disposed on the cushion 52. The cushion 52 and a base plate 54 are covered with the seat cover 51. The edge of the seat cover 51 is disposed under the bottom plate 53. The edge of the seat cover 51 is fixed to the bottom plate 53 using staples.

The bottom plate 53 includes the base plate 54 disposed above the storage box 10. As shown in FIG. 3, the pusher 13p of the seat lock device protrudes downward from the base plate 54 and is fixed to the bottom plate 53. The base plate 54 is connected to the storage box 10 via the hinge 12 (refer to FIG. 1A). When the seat 9 is moved at the closed position, the base plate 54 is disposed above the storage box 10 and overlaps the entire opening O1 of the storage box 10 in a plan view. The storage space S1 is defined by the bottom plate 53 and the storage box 10.

The bottom plate 53 includes, in addition to the base plate 54, a plurality of projections 55, 56 that come into contact with the storage box 10. FIG. 3 shows an example where the bottom plate 53 is provided with four projections 55, 56. The projections 55, 56 protrude downward from the base plate 54. The projections 55, 56 move between the open position and the closed position together with the base plate 54. When the seat 9 is moved at the closed position, all of the projections 55, 56 come into contact with the storage box 10. Thus, the seat 9 is supported by the storage box 10.

The four projections 55, 56 include two side projections 55 that protrude downward from the right end portion and the left end portion of the base plate 54 and two rear projections 56 that protrude downward from the rear end portion of the base plate 54. The two side projections 55 are disposed more forward than the two rear projections 56. The two side projections 55 are spaced apart in the vehicle width direction. The two rear projections 56 are also spaced apart in the vehicle width direction. The gap between the two side projections 55 in the vehicle width direction is wider than the gap between the two rear projections 56 in the vehicle width direction.

As shown in FIG. 6B, the flange portion 44 of the storage box 10 includes pedestal portions 46, 47 the number of which is equal to the number of the projections 55, 56. A plurality of the pedestal portions 46, 47 includes two side pedestal portions 46 that comes into contact with the two side projections 55, respectively and two rear pedestal portions 47 that comes into contact with the two rear projections 56, respectively. The two side pedestal portions 46 are disposed on the right side and the left side of the tubular portion 42, respectively. The two rear pedestal portions 47 are disposed behind the tubular portion 42. The two rear pedestal portions 47 are included in the rear panel 48. The two rear pedestal portions 47 is disposed above the rear cross member 8 and overlaps the rear cross member 8 in a plan view. The rear pedestal portion 47 is supported by the rear cross member 8.

When the seat 9 is moved at the closed position, the two side projections 55 of the seat 9 come into contact with the two side pedestal portions 46 of the storage box 10, respectively and the two rear projections 56 of the seat 9 come into contact with the two rear pedestal portions 47 of the storage box 10, respectively. At this time, the side projection 55 of the seat 9 is disposed at a position where the side projection 55 overlaps the side pedestal portion 46 in a plan view and the side projection 55 is located on the right side or the left side of the storage space S1 in a plan view. The rear projection 56 of the seat 9 is disposed at a position where the rear projection 56 overlaps the rear pedestal portion 47 in a plan view and the rear projection 56 is located behind the storage space S1 in a plan view. The weight of a human sitting on the seat 9 is transmitted to the rear frame 6 via the side pedestal portion 46 and transmitted to the rear cross member 8 via the rear pedestal portion 47.

As shown in FIG. 3, the straddled vehicle 1 includes a seal ring 57 that seals a gap between the seat 9 and the storage box 10. The seal ring 57 is held by any one of the seat 9 and the storage box 10. FIG. 3 shows an example where the seal ring 57 is held by the seat 9. In this example, the seat 9 is provided with a seal holder to hold the seal ring 57 and the storage box 10 is provided with a seal surface 58 against which the seal ring 57 is pressed.

The surface of the seal ring 57 is made from an elastic material such as resin or rubber. When the seat 9 is moved at the closed position, the surface of the seal ring 57 is pressed against the seal surface 58 included in the storage box 10, and the seal ring 57 elastically deforms. Thus, the surface of the seal ring 57 adheres tightly to the seal surface 58 and the gap between the seat 9 and the storage box 10 is sealed. This increases the degree of sealing of the storage space S1 defined by the seat 9 and the storage box 10.

The seal holder to hold the seal ring 57 is included in the bottom plate 53. As shown in FIG. 4, the seal ring 57 is held by the bottom plate 53. The seal ring 57 is disposed under the bottom plate 53. FIG. 4 shows an example where the seal holder is an annular groove 59 included in the bottom plate 53 and a projection 57p of the seal ring 57 is inserted in the groove 59. The seal holder may include the projection 57p and the seal ring 57 may include the groove 59.

As shown in FIG. 3, a plurality of projections 55, 56 is disposed outside of the seal ring 57. The pusher 13p of the seat lock device is also disposed outside of the seal ring 57. The two side projections 55 is disposed on the right side and the left side of the seal ring 57, respectively. The two rear projections 56 and the pusher 13p are disposed behind the seal ring 57. The two rear projections 56 is disposed more outward than the pusher 13p in the vehicle width direction.

As shown in FIG. 4, the storage box 10 is provided with the seal surface 58 against which the seal ring 57 is pressed. The seal surface 58 surrounds the whole circumference of the storage space S1 in a plan view. The upper surface of the tubular portion 42 is included in the seal surface 58. That is, the seal surface 58 extends outward in the radial direction of the tubular portion 42 from the upper edge 42u of the inner circumferential surface 42i of the tubular portion 42. The upper surface of the tubular portion 42 may not be included in the seal surface 58. For example, the upper surface of the tubular portion 42 may be surrounded by the seal surface 58 across an interval in the radial direction of the tubular portion 42 in a plan view.

As shown in FIG. 6B, the rear panel 48 provided in the flange portion 44 of the storage box 10 is disposed on the rear cross member 8 and overlaps the rear cross member 8 in a plan view. The rear panel 48 is supported by the rear cross member 8. A bolt B5 that fixes the rear panel 48 to the rear cross member 8 is inserted in a through hole that penetrates the rear panel 48 in the up-down direction. Thus, the storage box 10 is fixed to the rear cross member 8. FIG. 6B shows an example where the storage box 10 is fixed to the rear cross member 8 by two bolts B5.

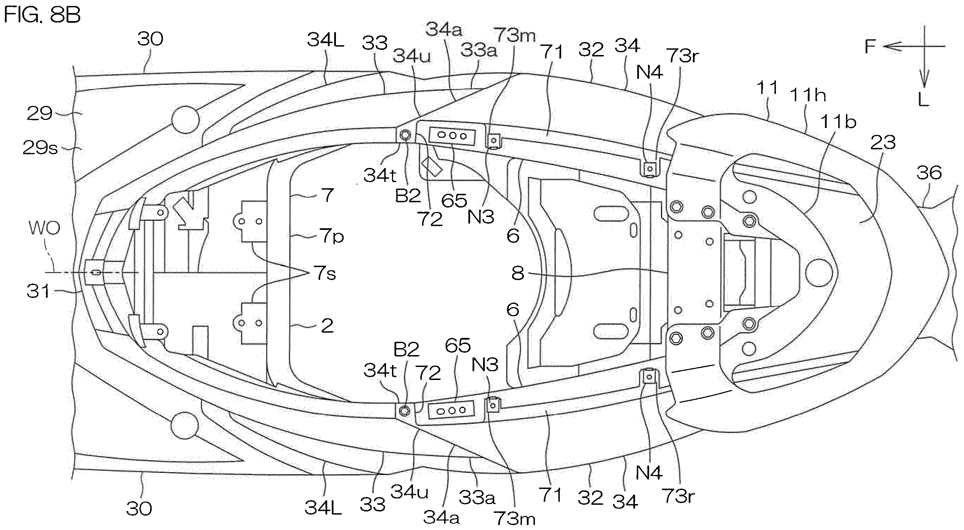

As shown in FIG. 5, the rear handle 11 includes, in addition to the handle portion 11h, a bracket portion 11B (refer to FIG. 8B as well) disposed inside of the handle portion 11h in a plan view. The bracket portion 11B is disposed above the rear cross member 8 and overlaps the rear cross member 8 in a plan view. The rear panel 48 is disposed above the bracket portion 11B and overlaps the bracket portion 11B in a plan view. The bracket portion 11B is fixed to the rear cross member 8 by a plurality of bolts. Thus, the rear handle 11 is fixed to the frame 2.

The front cross member 7 is disposed under the bottom portion 43 of the storage box 10. The bottom portion 43 is disposed above the stays 7s of the front cross member 7 and overlaps the front cross member 7 in a plan view. The bottom portion 43 is supported by the front cross member 7. As shown in FIG. 6B, bolts B1 to fix the bottom portion 43 to the stays 7s are inserted in through holes that penetrate the bottom portion 43 in the up-down direction. Thus, the storage box 10 is fixed to the front cross member 7. FIG. 6B shows an example where the storage box 10 is fixed to the front cross member 7 by two bolts B1.

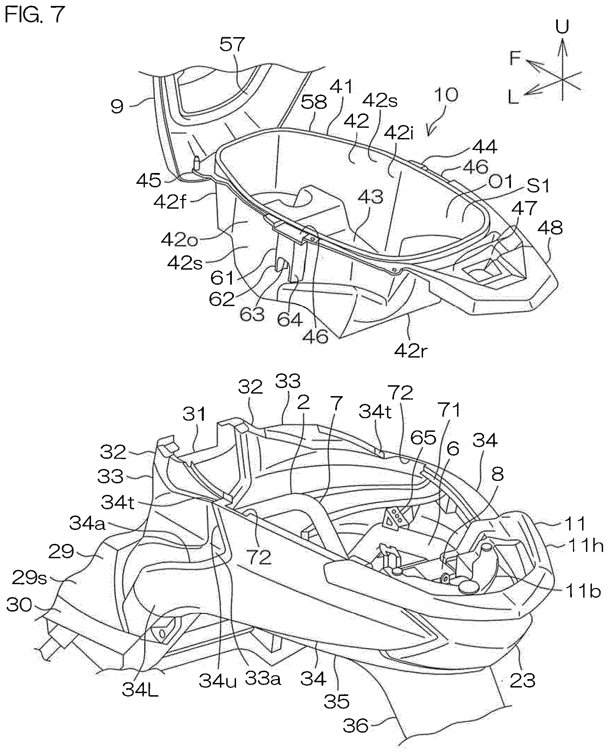

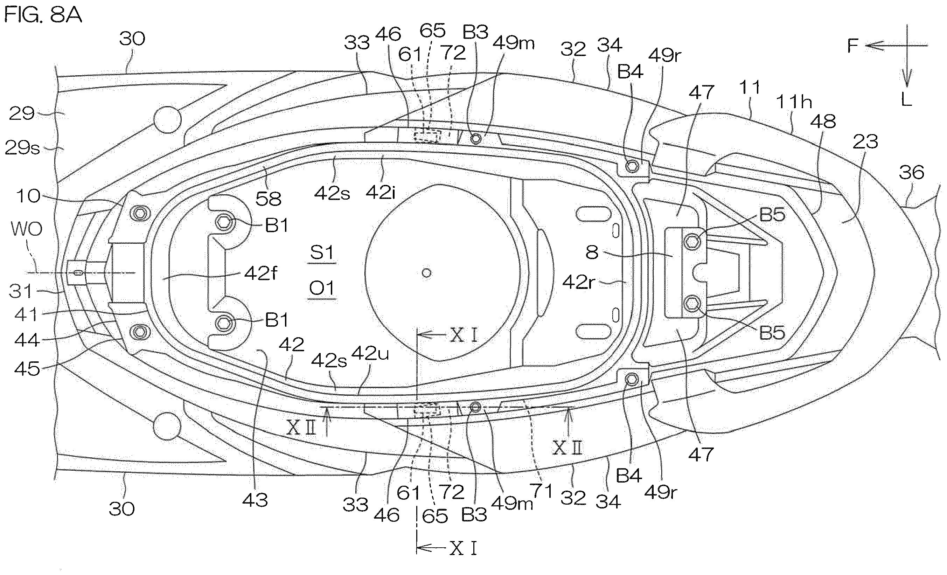

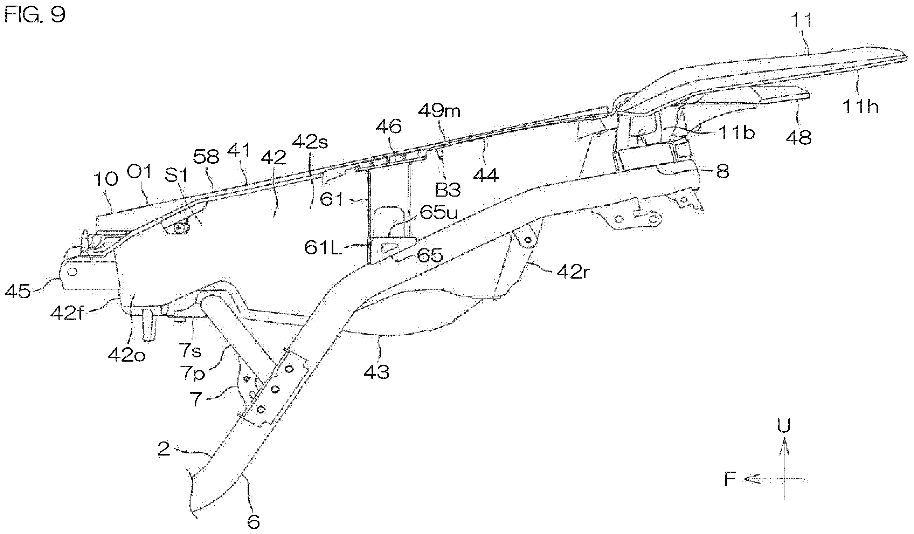

FIG. 7 is an exploded perspective view showing the seat 9, the storage box 10, the frame 2 and the rear side cover 32. FIG. 8A is a plan view showing the storage box 10 and the rear side cover 32. FIG. 8B is a plan view showing the frame 2 and the rear side cover 32. FIG. 9 is a left side view showing a mount portion 61 of the storage box 10 and a mount bracket 65 of the frame 2.

As shown in FIG. 7, the storage box 10 includes, in addition to the main body 41 and the flange portion 44, at least one of mount portions 61 that extends downward from the flange portion 44. The frame 2 includes at least one of mount brackets 65 the number of which is equal to the number of the at least one of mount portions 61. In the example shown in FIG. 7, two mount portions 61 is provided in the storage box 10, two mount brackets 65 are provided in the frame 2.

The storage box 10 is attached to the frame 2 and the rear side cover 32 together with the seat 9. As shown in FIG. 8A, in a state where the seat 9 and the storage box 10 are attached, the flange portion 44 of the storage box 10 is disposed above the upper end portion 71 of the rear side cover 32 and overlaps the upper end portion 71 of the rear side cover 32 in a plan view. Further, in this state, the mount portion 61 of the storage box 10 is disposed in a notch 72 of the rear side cover 32 in a plan view. As shown in FIG. 8B, the notch 72 of the rear side cover 32 penetrates the upper end portion 71 of the rear side cover 32 in the up-down direction and is recessed outward in the vehicle width direction in a plan view.

As shown in FIG. 8A, the two mount portions 61 are disposed on the right side and the left side of the tubular portion 42 of the storage box 10, respectively. The side pedestal portion 46 provided in the flange portion 44 is disposed above the mount portion 61 and overlaps the mount portion 61 in a plan view. The mount portion 61 is disposed above the mount bracket 65 and overlaps the mount bracket 65 in a plan view. The side pedestal portion 46, the mount portion 61 and the mount bracket 65 overlap each other in a plan view.

As shown in FIG. 9, the two mount brackets 65 protrude upward from the two rear frames 6, respectively (refer to FIG. 4 as well). The mount bracket 65 may be a member that is separate from the rear frame 6 and connected to the rear frame 6, or may be integral with the rear frame 6. The mount portion 61 extends downward from the side pedestal portion 46 to the mount bracket 65. The side pedestal portion 46 is supported by the mount bracket 65 via the mount portion 61. The mount portion 61 and the mount bracket 65 overlap the tubular portion 42 in a side view.

The lower surface 61L of the mount portion 61 is in contact with the upper surface 65u of the mount bracket 65. The lower surface 61L of the mount portion 61 is disposed higher than the bottom portion 43. The lower surface 61L of the mount portion 61 is disposed at a position higher than the upper end of the front cross member 7 and lower than the lower end of the rear cross member 8. The lower surface 61L of the mount portion 61 is also disposed at a position more rearward than the rear end of the front cross member 7 and more forward than the front end of the rear cross member 8. Thus, the mount portion 61 is supported by the mount bracket 65 at a position between the front cross member 7 and the rear cross member 8 in the front-rear direction.

As described above, the concave portion 34a (refer to FIG. 1B) provided in the second side cover 34 of the rear side cover 32 includes the upper portion 34u that is disposed above the convex portion 33a in a side view. As shown in FIG. 8B, a tip end portion 34t of the upper portion 34u is disposed above the first side cover 33 and overlaps the first side cover 33 in a plan view. The tip end portion 34t of the second side cover 34 is fixed to the first side cover 33 by a bolt B2. The notch 72 of the rear side cover 32 is disposed behind the bolt B2 and the tip end portion 34t in a plan view. As shown in FIG. 8A, the flange portion 44 of the storage box 10 is disposed above the bolt B2 and the tip end portion 34t and the bolt B2 and the tip end portion 34t are hidden by the flange portion 44.

The rear side cover 32 is fastened to the storage box 10. The rear side cover 32 includes at least one of fastened portions 73m, 73r that is fastened to the storage box 10. The storage box 10 includes at least one of fastening portions 49m, 49r the number of which is equal to the number of the at least one of fastened portions 73m, 73r. FIG. 8B shows an example where two fastened portions 73m, 73r are provided in the rear side cover 32. Thus, as shown in FIG. 8A, the storage box 10 includes two fastening portions 49m, 49r.

As shown in FIG. 8A, the two fastening portions 49m, 49r of the storage box 10 includes an intermediate fastening portion 49m provided in the intermediate portion of the flange portion 44 in the front-rear direction and a rear fastening portion 49r disposed more rearward than the intermediate fastening portion 49m. The intermediate fastening portion 49m and the rear fastening portion 49r are disposed more rearward than the side pedestal portion 46 of the storage box 10. The intermediate fastening portion 49m may be disposed more forward than the side pedestal portion 46.

As shown in FIG. 8B, the two fastened portions 73m, 73r of the rear side cover 32 includes an intermediate fastened portions 73m disposed under the intermediate fastening portion 49m of the storage box 10 and a rear fastened portions 73r disposed under the rear fastening portion 49r of the storage box 10. The intermediate fastened portions 73m and the rear fastened portions 73r are disposed more rearward than the notch 72 of the rear side cover 32. The intermediate fastened portions 73m may be disposed more forward than the notch 72. The intermediate fastened portions 73m and the rear fastened portions 73r are disposed above the rear frame 6 and overlap the rear frame 6 in a plan view.

A nut N3 is attached to the intermediate fastened portions 73m of the rear side cover 32. A nut N4 is attached to the rear fastened portions 73r of the rear side cover 32. FIG. 8B shows an example where the nut N3 is a spring nut including a U-shaped metal plate. In this example, the nut N4 is also a spring nut. The spring nut includes a main plate having a female screw and an auxiliary plate facing the main plate across an interval.

The main plate of the nut N3 is disposed under the intermediate fastened portions 73m of the rear side cover 32 and the auxiliary plate of the nut N3 is disposed above the intermediate fastened portions 73m of the rear side cover 32. Similarly, the main plate of the nut N4 is disposed under the rear fastened portions 73r of the rear side cover 32 and the auxiliary plate of the nut N4 is disposed above the rear fastened portions 73r of the rear side cover 32.

As shown in FIG. 8A, the head portion of the bolt B3 is disposed above the intermediate fastening portion 49m of the storage box 10. The shaft portion of the bolt B3 penetrates the intermediate fastening portion 49m of the storage box 10 in the up-down direction, and then penetrates the intermediate fastened portions 73m of the rear side cover 32 and the nut N3 in the up-down direction. Similarly, the head portion of the bolt B4 is disposed above the rear fastening portion 49r of the storage box 10. The shaft portion of the bolt B4 penetrates the rear fastening portion 49r of the storage box 10 in the up-down direction, and then penetrates the rear fastened portions 73r of the rear side cover 32 and the nut N4 in the up-down direction.

A male screw provided in the shaft portion of the bolt B3 is attached to a female screw of the nut N3. The intermediate fastening portion 49m of the storage box 10 and the intermediate fastened portions 73m of the rear side cover 32 are sandwiched by the bolt B3 and the nut N3 in the axial direction of the bolt B3 and fixed to each other. Similarly, the rear fastening portion 49r of the storage box 10 and the rear fastened portions 73r of the rear side cover 32 are sandwiched by the bolt B4 and the nut N4 in the axial direction of the bolt B4 and fixed to each other.

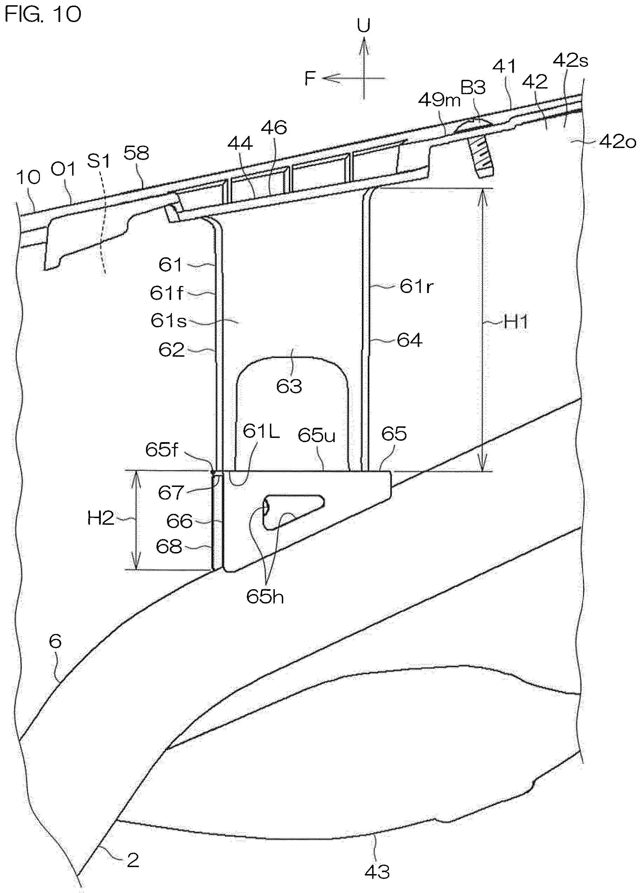

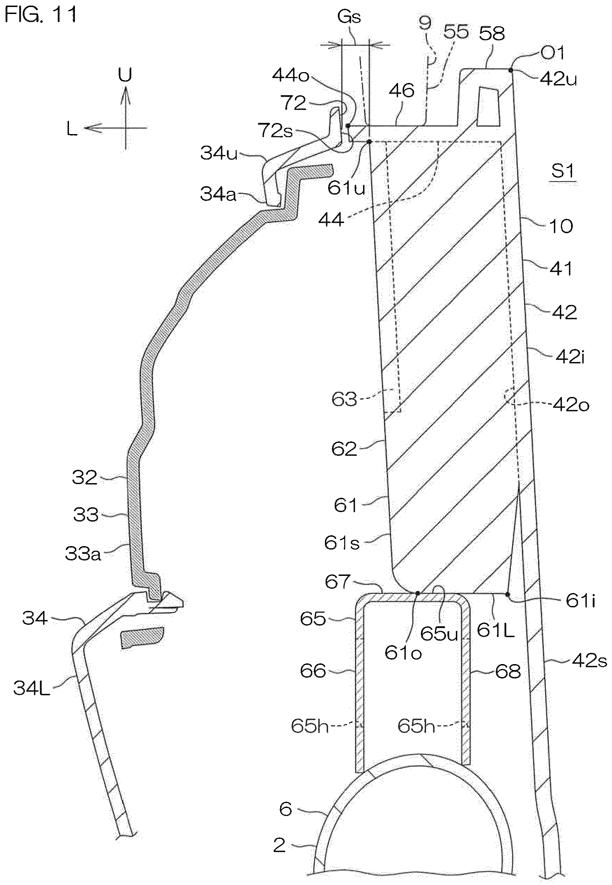

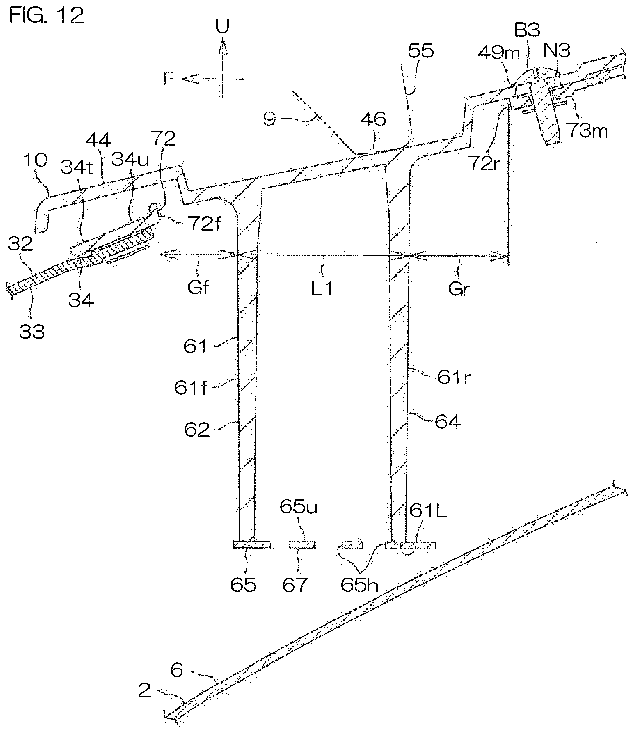

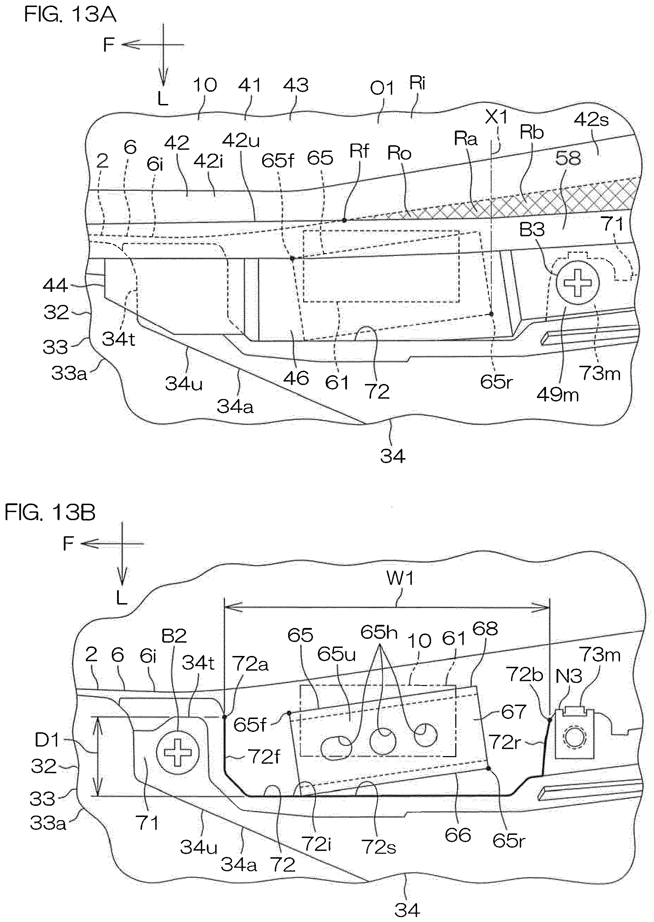

FIG. 10 is an enlarged view of a portion of FIG. 9. FIG. 11 is a cross-sectional view showing vertical cross sections of the storage box 10, the frame 2 and the rear side cover 32 taken along line XI-XI shown in FIG. 8A. FIG. 12 is a cross-sectional view showing vertical cross sections of the storage box 10, the frame 2 and the rear side cover 32 taken along line XII-XII shown in FIG. 8A. FIG. 13A is an enlarged view of a portion of FIG. 8A. FIG. 13B is an enlarged view of a portion of FIG. 8B. FIG. 11 shows vertical cross sections that are perpendicular to the front-rear direction and FIG. 12 shows vertical cross sections that are perpendicular to the vehicle width direction.

FIG. 10 shows an example where the mount portion 61 of the storage box 10 has a prism-shaped hollow configuration. The mount portion 61 may have a prism-shaped solid configuration, or may have a shape other than a prism-shape. As shown in FIG. 11, the mount portion 61 is integral with the tubular portion 42 and the flange portion 44, and made of the same material as that of the tubular portion 42 and the flange portion 44.
As long as the mount portion 61 is fixed to the flange portion 44, the mount portion 61 may be a member that is separate from the tubular portion 42 and the flange portion 44.

In the case of the example shown in FIG. 10, the mount portion 61 includes a pair of contact plates 62, 64 that are in contact with the mount bracket 65, and a connecting plate 63 that connects the pair of contact plates 62, 64 to each other. The pair of contact plates 62, 64 includes a front plate 62 and a rear plate 64 that face each other in the front-rear direction across an interval. The connecting plate 63 is disposed between the front plate 62 and the rear plate 64 in the front-rear direction. The connecting plate 63 extends rearward from the front plate 62 to the rear plate 64.

The front plate 62 of the mount portion 61 extends downward from the flange portion 44 and protrudes outward in the vehicle width direction from the tubular portion 42. The rear plate 64 of the mount portion 61 also extends downward from the flange portion 44 and protrudes outward in the vehicle width direction from the tubular portion 42. The connecting plate 63 of the mount portion 61 extends downward from the flange portion 44 and is spaced away from the tubular portion 42 in the vehicle width direction.

The front plate 62 of the mount portion 61 is shorter than the rear plate 64 of the mount portion 61 in the up-down direction. The connecting plate 63 of the mount portion 61 is shorter than the front plate 62 in the up-down direction. The front plate 62 and the rear plate 64 are in contact with the mount bracket 65. The connecting plate 63 is separate upward from the mount bracket 65 and is not in contact with the mount bracket 65. The connecting plate 63 may be in contact with the mount bracket 65.

In the case of the example shown in FIG. 10, the front surface of the front plate 62 corresponds to the front surface 61f of the mount portion 61, and the rear surface of the rear plate 64 corresponds to the rear surface 61r of the mount portion 61. Further, in the case of the example, the side surface of the front plate 62, the side surface of the connecting plate 63 and the side surface of the rear plate 64 correspond to the side surface 61s of the mount portion 61, and the lower end surface of the front plate 62 and the lower end surface of the rear plate 64 correspond to the lower surface 61L of the mount portion 61. The lower surface 61L of the mount portion 61 corresponds to the lower end of the mount portion 61.

As shown in FIG. 12, the front surface 61f of the mount portion 61 and the rear surface 61r of the mount portion 61 are vertical planes that are perpendicular to the front-rear direction. As shown in FIG. 11, the side surface 61s of the mount portion 61 is a plane that is inclined with respect to the vertical plane so that the side surface 61s is disposed outward in the vehicle width direction as the flange portion 44 is approached. The side surface 61s of the mount portion 61 may be a plane that is perpendicular to the vehicle width direction. At least one of the front surface 61f of the mount portion 61 and the rear surface 61r of the mount portion 61 may be inclined with respect to the vertical plane.

The side surface 61s of the mount portion 61 extends downward from the flange portion 44 of the storage box 10. The flange portion 44 includes a projecting portion that projects outward in the vehicle width direction from the upper end 61u of the side surface 61s of the mount portion 61. That is, in the cross-section shown in FIG. 11, the upper end 61u of the side surface 61s of the mount portion 61 is disposed more inward than the outer end 44o of the flange portion 44 in the vehicle width direction. The flange portion 44 may not project from the upper end 61u of the side surface 61s of the mount portion 61 in the vehicle width direction.

As shown in FIG. 11, the lower surface 61L of the mount portion 61 is a plane that is parallel to the upper surface 65u of the mount bracket 65. As long as the lower surface 61L of the mount portion 61 is parallel to the upper surface 65u of the mount bracket 65, the lower surface 61L of the mount portion 61 may be a horizontal flat plane, or may be a flat plane that is inclined with respect to the horizontal plane. FIG. 11 shows an example where the outer end 61o of the lower surface 61L of the mount portion 61 in the vehicle width direction is in contact with the upper surface 65u of the mount bracket 65, and the inner end 61i of the lower surface 61L of the mount portion 61 in the vehicle width direction is disposed more inward than the upper surface 65u of the mount bracket 65 in the vehicle width direction. The outer end 61o may be disposed more outward than the upper surface 65u of the mount bracket 65 in the vehicle width direction. The inner end 61i may be disposed on the upper surface 65u of the mount bracket 65.

The mount bracket 65 includes a contact plate 67 that is in contact with the mount portion 61 and a pair of supporting plates 66, 68 that support the contact plate 67. At least one of the contact plate 67 and the supporting plates 66, 68 may be a plate including at least one of penetrating holes 65h for weight saving. FIG. 11 and FIG. 12 show examples where a plurality of penetrating holes 65h are formed on the contact plate 67 and the supporting plates 66, 68.

As shown in FIG. 11, the supporting plates 66, 68 of the mount bracket 65 extends upward from the rear frame 6. The lower end portions of the supporting plates 66, 68 are fixed to the rear frame 6. The pair of supporting plates 66, 68 includes an outer plate 66 and an inner plate 68 that face each other in the vehicle width direction across an interval. The contact plate 67 is disposed between the pair of supporting plates 66, 68. The contact plate 67 extends inward in the vehicle width direction from the outer plate 66 to the inner plate 68

The contact plate 67 includes the upper surface that is in contact with the mount portion 61. The upper surface of the contact plate 67 corresponds to the upper surface 65u of the mount portion 61. As shown in FIG. 12, the front plate 62 of the mount portion 61 is supported by the mount bracket 65 due to the contact between the lower end surface of the front plate 62 and the upper surface 65u of the mount portion 61. Similarly, the rear plate 64 of the mount portion 61 is supported by the mount bracket 65 due to the contact between the lower end surface of the rear plate 64 and the upper surface 65u of the mount portion 61.

As shown in FIG. 10, the height of the mount bracket 65, i.e., the length of the mount bracket 65 in the up-down direction increases as the front end 65f of the mount bracket 65 is approached. The length of the front end 65f of the mount bracket 65 in the up-down direction corresponds to the maximum value H2 of the length of the mount bracket 65 in the up-down direction. The length of the rear plate 64 of the mount portion 61 in the up-down direction corresponds to the maximum value H1 of the length of the mount portion 61 in the up-down direction. The maximum value H1 of the length of the mount portion 61 in the up-down direction is greater than the maximum value H2 of the length of the mount bracket 65 in the up-down direction. Thus, the mount portion 61 is longer than the mount bracket 65 in the up-down direction.

As described above, the mount portion 61 of the storage box 10 is disposed in the notch 72 of the rear side cover 32 in a plan view. As shown in FIG. 13A, the notch 72 of the rear side cover 32 is disposed under the flange portion 44 of the storage box 10 and overlaps the flange portion 44 in a plan view. The thick line in FIG. 13B represents the inner surface 72i of the notch 72. In the example shown in FIG. 13B, the notch 72 has a U-shaped configuration that is recessed outward in the vehicle width direction in in a plan view. As long as at least a portion of the mount portion 61 is disposed in the notch 72 in a plan view, the notch 72 may have a shape in a plan view other than a U-shape.

As shown in FIG. 13B, the inner surface 72i of the notch 72 includes the front surface 72f located in front of the mount portion 61 in a plan view, the side surface 72s located outward of the mount portion 61 in the vehicle width direction in a plan view and the rear surface 72r located behind of the mount portion 61 in a plan view. The front surface 72f and the rear surface 72r face each other in the front-rear direction across an interval. The width W1 of the notch 72 is longer than the depth D1 of the notch 72. That is, the maximum value of the length in the front-rear direction from the front surface 72f to the rear surface 72r is greater than the maximum value of the distance in the vehicle width direction from the side surface 72s to the inner end 72a of the front surface 72f in the vehicle width direction or to the inner end 72b of the front surface 72f in the vehicle width direction.

When the storage box 10 is not attached, the mount bracket 65 of the frame 2 is disposed in the notch 72 of the rear side cover 32 in a plan view and is visible in a plan view. The front surface 72f of the notch 72 is disposed in front of the mount bracket 65 in a plan view and the rear surface 72r of the notch 72 is disposed behind the mount bracket 65 in a plan view. The side surface 72s of the notch 72 is disposed outward of the mount bracket 65 in the vehicle width direction in a plan view.

The front surface 72f, the side surface 72s and the rear surface 72r of the notch 72 are disposed above the rear frame 6 and overlaps the rear frame 6 in a plan view. The inner end 72a of the front surface 72f of the notch 72 overlaps the rear frame 6 in a plan view. Similarly, the inner end 72b of the front surface 72f of the notch 72 overlaps the rear frame 6 in a plan view. At least one of the inner end 72a of the front surface 72f and the inner end 72b of the front surface 72f may be disposed more inward than the inner edge 6i of the rear frame 6 in the vehicle width direction in a plan view.

As shown in FIG. 12, a gap Gf between the front surface 61f of the mount portion 61 and the front surface 72f of the notch 72 in the front-rear direction is narrower than a gap Gr between the rear surface 61r of the mount portion 61 and the rear surface 72r of the notch 72 in the front-rear direction. A gap Gs (refer to FIG. 11) between the side surface 61s of the mount portion 61 and the side surface 72s of the notch 72 in the vehicle width direction is narrower than the gap Gf. Any one of the gap Gf, the gap Gr and the gap Gs is smaller than the length L1 of the mount portion 61 in the front-rear direction, i.e., the length in the front-rear direction from the front surface 61f of the mount portion 61 to the rear surface 61r of the mount portion 61. Further, any one of the gap Gf, the gap Gr and the gap Gs is smaller than the maximum value H1 (refer to FIG. 10) of the length of the mount portion 61 in the up-down direction.

When the storage box 10 is attached or removed, the seat 9 and the storage box 10 are moved in the up-down direction with respect to the frame 2 and the rear side cover 32 while the fixation of the storage box 10 with respect to the frame 2 and the rear side cover 32 is released. The upper end portion 71 of the rear side cover 32 is disposed under the storage box 10 so that the seat 9 and the storage box 10 are attached to and removed from the frame 2 while the rear side cover 32 is attached to the frame 2.

When the seat 9 and the storage box 10 are attached, the mount portion 61 of the storage box 10 passes through the notch 72 in the up-down direction while being guided by the inner surface 72i of the notch 72 in the up-down direction. Thus, the mount portion 61 of the storage box 10 is mounted on the mount bracket 65 of the frame 2. Similarly, when the seat 9 and the storage box 10 are removed, the mount portion 61 of the storage box 10 passes through the notch 72 in the up-down direction while being guided by the inner surface 72i of the notch 72 in the up-down direction. Thus, the seat 9 and the storage box 10 can be easily attached and removed.

The cross-hatched region in Fig. 13A represents the outer region Ro included in the opening O1 of the storage box 10. The outer region Ro is a portion disposed more outward than the inner edge 6i of the rear frame 6 in the vehicle width direction in a plan view. The outer region Ro includes a side portion Ra and a rear portion Rb. The side portion Ra is a portion disposed more forward than the boundary line X1, and the rear portion Rb is a portion disposed more rearward than the boundary line X1. The boundary line X1 is a straight line that perpendicular to the front-rear direction in a plan view and that passes through the rear end 65r of the mount bracket 65.

The side portion Ra of the outer region Ro is disposed at a position more rearward than the front end 65f of the mount bracket 65 and more forward than the rear end 65r of the mount bracket 65 in a plan view. Thus, the front end Rf of the outer region Ro is disposed at a position more rearward than the front end 65f of the mount bracket 65 and more forward than the rear end 65r of the mount bracket 65 in a plan view. Thus, the opening O1 of the storage box 10 is enlarged in the vehicle width direction at a bracket installation position, i.e., a position that passes though the mount bracket 65 in the vehicle width direction in a plan view.

The rear portion Rb of the outer region Ro is disposed more rearward than the rear end 65r of the mount bracket 65 in a plan view. Thus, the rear end Rr (refer to FIG. 6B) of the outer region Ro is disposed more rearward than the rear end 65r of the mount bracket 65 in a plan view. Accordingly, the opening O1 of the storage box 10 is enlarged in the vehicle width direction not only at the bracket installation position, but also at a position more rearward than the bracket installation position.

As described above, in the present preferred embodiment, the rear frame 6 of the frame 2 is disposed outward of the storage box 10 in the vehicle width direction and overlaps the storage box 10 in a side view. The rear side cover 32 is disposed outward of the rear frame 6 in the vehicle width direction and overlaps the storage box 10 and the rear frame 6 in a side view. The storage box 10 includes the tubular portion 42 surrounding the storage space S1 in which an article is disposed, the flange portion 44 protruding from the outer circumferential surface 42o of the tubular portion 42 and the mount portion 61 extending downward from the flange portion 44. The mount portion 61 of the storage box 10 is supported by the mount bracket 65 protruding upward from the rear frame 6.

In this way, the mount bracket 65 of the frame 2 does not support the flange portion 44 of the storage box 10 directly, but supports the flange portion 44 via the mount portion 61 of the storage box 10 extending downward from the flange portion 44. There is the mount portion 61 between the flange portion 44 and the mount bracket 65, and thus the upper end of the mount bracket 65 (the upper surface 65u of the mount bracket 65) moves downward with respect to the opening O1 of the storage box 10. Thus, the width of the opening O1 of the storage box 10 is unlikely to be limited by the mount bracket 65. Further, the position of the upper end of the mount bracket 65 lowers, and thus the width of the upper end portion of the storage box 10 is unlikely to be limited by the mount bracket 65. Thus, the opening O1 of the storage box 10 can be enlarged in the vehicle width direction and the capacity of the storage box 10 can be increased.

Further, the mount portion 61 of the storage box 10 is disposed in the notch 72 of the rear side cover 32 in a plan view. The notch 72 of the rear side cover 32 penetrates the upper end portion 71 of the rear side cover 32 in the up-down direction and is recessed outward in the vehicle width direction in a plan view. In a case where the notch 72 is not provided in the rear side cover 32, the upper end portion 71 of the rear side cover 32 needs to be disposed laterally of the mount portion 61 of the storage box 10. In this case, the width of the straddled vehicle 1 increases at a position where the mount portion 61 is provided. Thus, it is possible to enlarge the opening O1 of the storage box 10 in the vehicle width direction while preventing or minimizing an increase in the width of the entire straddled vehicle 1 and to increase the capacity of the storage box 10 by providing the notch 72 that houses the mount portion 61.

In the present preferred embodiment, the mount portion 61 of the storage box 10 is long in the up-down direction and the mount bracket 65 of the frame 2 is short in the up-down direction. That is, the maximum value H1 of the length of the mount portion 61 in the up-down direction is greater than the maximum value H2 of the length of the mount bracket 65 in the up-down direction. When the mount bracket 65 is short in the up-down direction, the position of the upper end of the mount bracket 65 further lowers. It shortens in the up-down direction a range where the mount bracket 65 limits the width of the storage box 10. Thus, the capacity of the storage box 10 can be further increased.

In the present preferred embodiment, the rear cross member 8 of the frame 2 is disposed behind the storage box 10. The lower end of the mount portion 61 of the storage box 10 (the lower surface 61L of the mount portion 61) is disposed lower than the lower end of the rear cross member 8. When the position of the lower end of the mount portion 61 lowers, the position of the upper end of the mount bracket 65 also lowers. Thus, a range where the mount bracket 65 limits the width of the storage box 10 shortens in the up-down direction, and thus the capacity of the storage box 10 can be further increased.

In the present preferred embodiment, the opening O1 of the storage box 10 is enlarged in the vehicle width direction so as to overlap the rear frame 6 in a plan view. That is, the opening O1 of the storage box 10 includes the outer region Ro that is disposed more outward than the inner edge 6i of the rear frame 6 in the vehicle width direction, and this outer region Ro overlaps the rear frame 6 in a plan view. Thus, it is possible to enlarge the width of the opening O1 of the storage box 10 and to make it easier to take an article into and from the storage box 10.

Further, the opening O1 of the storage box 10 is not merely enlarged in the vehicle width direction, but is enlarged in the vehicle width direction at a bracket installation position, i.e., a position that passes though the mount bracket 65 in a plan view. Specifically, the outer region Ro includes the side portion Ra that is disposed at a position more rearward than the front end 65f of the mount bracket 65 and more forward than the rear end 65r of the mount bracket 65 in a plan view.

In the conventional straddled vehicle described above, the upper end of the supporting bracket is disposed at substantially the same height as the opening of the storage box, and thus the width of the opening of the storage box is unable to be enlarged at the bracket installation position. In the arrangement according to the preferred embodiment, there is the mount portion 61 between the flange portion 44 and the mount bracket 65 and the position of the upper end of the mount bracket 65 is lowered, so that the width of the opening O1 of the storage box 10 is unlikely to be limited by the mount bracket 65. Thus, the opening O1 of the storage box 10 can be enlarged at the bracket installation position and the side portion Ra can be provided in the opening O1 of the storage box 10. Accordingly, it is possible to make it easier to take an article into and from the storage box 10.

In the present preferred embodiment, the outer region Ro is included in the opening O1 of the storage box 10 and disposed more outward than the inner edge 6i of the rear frame 6 in the vehicle width direction. Further, the gap between the pair of rear frames 6 normally narrows at the rear portion of the rear frame 6 in the vehicle width direction, so that the width of the opening O1 of the storage box 10 also narrows at the rear portion of the rear frame 6. Nevertheless, the outer region Ro includes the rear portion Rb that is disposed more rearward than the rear end 65r of the mount bracket 65 in a plan view. Thus, it is possible to maintain the width of the opening O1 of the storage box 10 even at the rear portion of the rear frame 6 and to keep the convenience of users to take an article into and from the storage box 10.

In the present preferred embodiment, the upper end portion 71 of the rear side cover 32 is disposed under the storage box 10. Thus, when the storage box 10 is moved upward, the upper end portion 71 of the rear side cover 32 does not come into contact with the storage box 10. Accordingly, the storage box 10 can be removed from the frame 2 while the rear side cover 32 is attached to the frame 2. Further, when the storage box 10 is moved downward at a space above the upper end portion 71 of the rear side cover 32, the storage box 10 is attached to the frame 2 while the rear side cover 32 is attached to the frame 2. Thus, the storage box 10 is easily attached and removed when manufacturing, maintaining and repairing the straddled vehicle 1.

In the present preferred embodiment, the outer surface of the mount portion 61 of the storage box 10 is disposed close to the inner surface 72i of the notch 72 of the rear side cover 32. The gap between the notch 72 of the rear side cover 32 and the mount portion 61 of the storage box 10 (the gap Gf, the gap Gr and the gap Gs) is narrower than the maximum value H1 of the length of the mount portion 61 in the up-down direction. Since the gap between the notch 72 and the mount portion 61 is narrow, the outer surface of the mount portion 61 is guided in the up-down direction by the inner surface 72i of the notch 72 when attaching and removing the storage box 10. Thus, the storage box 10 can be easily attached and removed.

Additionally, since the length of the mount portion 61 in the up-down direction is greater than the gap between the notch 72 and the mount portion 61 is long in the up-down direction, the position of the upper end of the mount bracket 65 supporting the mount portion 61 of the storage box 10 is further lowered. Thus, a range where the mount bracket 65 limits the width of the storage box 10 shortens in the up-down direction, and thus the capacity of the storage box 10 can be further increased.

In the present preferred embodiment, the side pedestal portion 46 is provided in the flange portion 44 of the storage box 10 and comes into contact with the seat 9. Load in a down direction applied to the seat 9 is transmitted from the seat 9 to the side pedestal portion 46, and transmitted from the side pedestal portion 46 to the mount portion 61. Further, this load is transmitted to the mount bracket 65 supporting the mount portion 61. Thus, load in the down direction applied to the seat 9 can be efficiently transmitted to the frame 2.

In the present preferred embodiment, the side pedestal portion 46 provided in the flange portion 44 of the storage box 10 is disposed above the mount portion 61 of the storage box 10 and the mount portion 61 is disposed above the mount bracket 65. Load in the down direction applied to the seat 9 is applied to the side pedestal portion 46, which is in contact with the seat 9, and transmitted from the side pedestal portion 46 to the mount portion 61. The side pedestal portion 46, the mount portion 61 and the mount bracket 65 overlap each other in a plan view. Thus, load in the down direction applied to the seat 9 can be efficiently transmitted to the frame 2 while preventing an increase in bending moment that is generated in the side pedestal portion 46, the mount portion 61 and the mount bracket 65.

In the present preferred embodiment, the upper end portion 71 of the rear side cover 32 not only overlaps the flange portion 44 of the storage box 10 in a plan view, but also is fixed to the flange portion 44. That is, the upper end portion of the rear side cove includes the fastened portion (the intermediate fastened portion 73m and the rear fastened portion 73r) that is fastened to the flange portion 44 of the storage box 10. In this way, since portions of the upper end portion 71 of the rear side cover 32 in which the notch 72 is not provided is fixed to the storage box 10, vibrations of the rear side cover 32 generated while the straddled vehicle 1 is traveling are reduced.

### Other Preferred Embodiments

The present teaching is not restricted to the contents of the preferred embodiments described above and various modifications are possible within the scope of the appended claims.

For example, as long as the upper end of the mount bracket 65 is separate downward from the opening O1 of the storage box 10, the length of the mount portion 61 of the storage box 10 in the up-down direction may be greater than or equal to the length of the mount bracket 65 of the storage box 10 in the up-down direction.

As long as the upper end of the mount bracket 65 is separate downward from the opening O1 of the storage box 10, the lower end of the mount portion 61 of the storage box 10 may be disposed at the same height as the lower end of the rear cross member 8, or may be disposed above the lower end of the rear cross member 8.

The outer region Ro included in the opening O1 of the storage box 10 may include a portion disposed more forward than the front end 65f of the mount bracket 65 in a plan view.

The entire opening O1 of the storage box 10 may be disposed between the inner edges 6i of the pair of rear frames 6 in a plan view. That is, the opening O1 of the storage box 10 may not include the outer region Ro.

The upper end portion 71 of the rear side cover 32 may be disposed not at a position under the flange portion 44 of the storage box 10, but at a position over the flange portion 44 of the storage box 10.

As long as the mount portion 61 of the storage box 10 extends downward from the flange portion 44 of the storage box 10, the mount portion 61 of the storage box 10 may extend downward from a portion other than the side pedestal portion 46.

The side pedestal portion 46, the mount portion 61 and the mount bracket 65 may not overlap each other in a plan view. The entirety of side pedestal portion 46 may not overlap the mount bracket 65 in a plan view, for example.

The upper end portion 71 of the rear side cover 32 may not include the at least one of fastened portions (the intermediate fastened portion 73m and the rear fastened portion 73r) that is fastened to the flange portion 44 of the storage box 10.

The straddled vehicle 1 is not limited to a motorcycle including a swing unit that supports the rear wheel Wr and that is swingable up and down relative to the frame 2, but may be a motorcycle including a swing arm that supports the rear wheel Wr and that is swingable up and down relative to the engine 17 and the frame 2. The straddled vehicle 1 may be a straddled vehicle including three or more wheels.

## Claims

1. A straddled vehicle (1) comprising:
a storage box (10) that defines a storage space (S1) in which an article is to be disposed;
a seat (9) that is disposed above the storage box (10) in an up-down direction of the vehicle and opens and closes an opening (O1) provided in an upper end of the storage space (S1) by turning upward and downward with respect to the storage box (10);
a frame (2) that includes a pair of rear frames (6) that are disposed on a right side and a left side of the storage box (10) in a right-left direction of the vehicle, respectively, and a mount bracket (65) that protrudes upward from one of the pair of rear frames (6) in the up-down direction of the vehicle and supports the storage box (10); and
an exterior cover that includes a pair of rear side covers (32) disposed on the right side and the left side of the pair of rear frames (6), respectively, and a rear center cover (35) disposed between the pair of rear side covers (32), wherein the rear side covers (32) are disposed under the seat (9) in a side view of the vehicle (1), wherein each of the rear side covers (32) is disposed outward of the pair of rear frames (6) in a vehicle width direction and overlaps the storage box (10) and the pair of rear frames (6) in the side view of the vehicle (1),
wherein
the storage box (10) includes a tubular portion (42) that surrounds the storage space (S1), a flange portion (44) that protrudes from an outer circumferential surface (42o) of the tubular portion (42) and a mount portion (61) that is disposed on the mount bracket (65),
**characterized in that** the mount portion (61) extends downward from the flange portion (44) in the up-down direction of the vehicle,
each of the rear side covers (32) includes an upper end portion (71) that overlaps the flange portion (44) in a plan view of the vehicle (1) and a notch (72) that penetrates the upper end portion (71) in the up-down direction of the vehicle and is recessed outward in the vehicle width direction in a plan view of the vehicle (1), and
the mount portion (61) is disposed inside of the notch (72) of one of the rear side covers (32) in a plan view of the vehicle (1).

2. A straddled vehicle (1) according to claim 1, wherein the mount portion (61) of the storage box (10) is longer than the mount bracket (65) of the frame (2) in the up-down direction of the vehicle.

3. A straddled vehicle (1) according to claim 1 or 2, wherein
the frame (2) further includes a rear cross member (8) that extends from the one of the pair of rear frames (6) to the other of the pair of rear frames (6) and that is disposed behind the storage box (10) in a front-rear direction of the vehicle, and
the mount portion (61) of the storage box (10) includes a lower end (61L) that is disposed lower than the rear cross member (8) in the up-down direction of the vehicle.

4. A straddled vehicle (1) according to any one of claims 1 to 3, wherein
the opening (O1) of the storage box (10) includes an outer region (Ro) that is disposed more outward than an inner edge (6i) of the rear frame (6) in the vehicle width direction in a plan view of the vehicle (1), and
the outer region (Ro) includes a side portion (Ra) that is disposed at a position more rearward than a front end (65f) of the mount bracket (65) and more forward than a rear end (65r) of the mount bracket (65) in the front-rear direction of the vehicle in a plan view of the vehicle (1).

5. A straddled vehicle (1) according to claim 4, wherein the outer region (Ro) further includes a rear portion (Rb) that is disposed more rearward than the rear end (65r) of the mount bracket (65) in the front-rear direction of the vehicle in a plan view of the vehicle (1).

6. A straddled vehicle (1) according to any one of claims 1 to 3, wherein
the opening (O1) of the storage box (10) includes an outer region (Ro) that is disposed more outward than an inner edge (6i) of the rear frame (6) in the vehicle width direction in a plan view of the vehicle (1), and
the outer region (Ro) includes a rear portion (Rb) that is disposed more rearward than a rear end (65r) of the mount bracket (65) in the front-rear direction of the vehicle in a plan view of the vehicle (1).

7. A straddled vehicle (1) according to any one of claims 1 to 6, wherein the upper end portion (71) of each rear side cover (32) is disposed under the storage box (10) in the up-down direction of the vehicle such that the storage box (10) is attached to and removed from the frame (2) while the rear side covers (32) are attached to the frame (2).

8. A straddled vehicle (1) according to any one of claims 1 to 7, wherein a gap (Gf, Gr, Gs) between the notch (72) of said one of the rear side covers (32) and the mount portion (61) of the storage box (10) is narrower than a length (H1) of the mount portion (61) in the up-down direction of the vehicle.

9. A straddled vehicle (1) according to any one of claims 1 to 8, wherein
the flange portion (44) of the storage box (10) includes a pedestal portion (46) that comes into contact with the seat (9), and
the mount portion (61) of the storage box (10) extends downward in the up-down direction of the vehicle from the pedestal portion (46).

10. A straddled vehicle (1) according to claim 9, wherein the pedestal portion (46), the mount portion (61) and the mount bracket (65) overlap each other in a plan view of the vehicle (1).

11. A straddled vehicle (1) according to any one of claims 1 to 10, wherein the upper end portion (71) of each rear side cover (32) includes a fastened portion (73m, 73r) that is fastened to the flange portion (44) of the storage box (10).

## Patentansprüche

1. Ein Spreiz-Sitz-Fahrzeug (1), das umfasst:
einen Stau-Kasten (10), die einen Stau-Raum (S1) definiert, in dem ein Gegenstand unterzubringen ist;
einen Sitz (9), der oberhalb des Stau-Kastens (10) in einer Aufwärts-Abwärts-Richtung des Fahrzeugs angeordnet ist und eine Öffnung (O1), die in einem oberen Ende des Stau-Raums (S1) vorgesehen ist, durch Aufwärts- und Abwärtsdrehen in Bezug auf den Stau-Kasten (10) öffnet und verschließt;
einen Rahmen (2), der ein Paar hintere Rahmen (6) beinhaltet, die jeweils auf einer rechten Seite und einer linken Seite des Stau-Kastens (10) in einer Rechts-Links-Richtung des Fahrzeugs angeordnet sind, und
eine Montage-Klammer (65), die von einem des Paars hinterer Rahmen (6) in der Aufwärts-Abwärts-Richtung des Fahrzeugs nach oben ragt und den Stau-Kasten (10) lagert; und
eine Außen-Abdeckung, die ein Paar hintere Seiten-Abdeckungen (32), die jeweils auf der rechten und der linken Seite des Paars hinterer Rahmen (6) angeordnet sind,
und eine hintere Mittel-Abdeckung (35), die zwischen dem Paar hinterer Seiten-Abdeckungen (32) angeordnet ist, beinhaltet, wobei die hinteren Seiten-Abdeckungen (32) unter dem Sitz (9) in einer Seiten-Ansicht des Fahrzeugs (1) angeordnet sind, wobei jede der hinteren Seiten-Abdeckungen (32) außerhalb des Paars von hinteren Rahmen (6) in einer Fahrzeug-Breiten-Richtung angeordnet ist und den Stau-Kasten (10) und das Paar von hinteren Rahmen (6) in der Seiten-Ansicht des Fahrzeugs (1) überlappt, wobei
der Stau-Kasten (10) einen rohrförmigen Abschnitt (42), der den Stau-Raum (S1) umgibt, einen Flansch-Abschnitt (44), der von einer äußeren Umfangsfläche (42o) des rohrförmigen Abschnitts (42) vorsteht, und einen Montage-Abschnitt (61) beinhaltet, der an Montage-Klammer (65) angeordnet ist, **dadurch gekennzeichnet,**
**dass** der Montage-Abschnitt (61) sich von dem Flansch-Abschnitt (44) nach unten in der Aufwärts-Abwärts-Richtung des Fahrzeugs erstreckt,
jede der hinteren Seiten-Abdeckungen (32) einen oberen End-Abschnitt (71), der den Flansch-Abschnitt (44) in einer Draufsicht auf das Fahrzeug (1) überlappt, und eine Nut (72), die den oberen End-Abschnitt (71) in der Aufwärts-Abwärts-Richtung des Fahrzeugs durchdringt und in der Fahrzeug-Breiten-Richtung nach außen zurückgesetzt ist, in einer Draufsicht auf das Fahrzeug (1), und
der Montage-Abschnitt (61) in einer Draufsicht auf das Fahrzeug (1) innerhalb der Nut (72) von einem der hinteren Seiten-Abdeckungen (32) angeordnet ist.

2. Ein Spreiz-Sitz-Fahrzeug (1) gemäß Anspruch 1, wobei der Montage-Abschnitt (61) des Stau-Kastens (10) länger ist als die Montage-Klammer (65) des Rahmens (2) in Aufwärts-Abwärts-Richtung des Fahrzeugs.

3. Ein Spreiz-Sitz-Fahrzeug (1) gemäß Anspruch 1 oder 2, wobei der Rahmen (2) weiterhin ein hinteres Quer-Element (8) beinhaltet, das sich von dem einen des Paars von hinteren Rahmen (6) zu dem anderen des Paars von hinteren Rahmen (6) erstreckt und der hinter dem Stau-Kasten (10) in einer Vorder-Rück-Richtung des Fahrzeugs angeordnet ist, und
der Montage-Abschnitt (61) des Stau-Kastens (10) ein unteres Ende (61L) beinhaltet, das niedriger als das hintere Quer-Element (8) in Aufwärts-Abwärts-Richtung des Fahrzeugs angeordnet ist.

4. Ein Spreiz-Sitz-Fahrzeug (1) gemäß irgendeinem der Ansprüche 1 bis 3, wobei die Öffnung (O1) des Stau-Kastens (10) einen äußeren Bereich (Ro) beinhaltet, der weiter außen angeordnet ist als eine Innenkante (6i) des hinteren Rahmens (6) in Fahrzeug-Breiten-Richtung in einer Draufsicht auf das Fahrzeug (1), und
der äußere Bereich (Ro) einen Seiten-Abschnitt (Ra) beinhaltet, der an einer Position angeordnet ist, die weiter hinten liegt als ein vorderes Ende (65f) der Montage-Klammer (65) und weiter vorne als ein hinteres Ende (65r) der Montage-Klammer (65) in der Vorder-Rück-Richtung des Fahrzeugs in einer Draufsicht auf das Fahrzeug (1).

5. Ein Spreiz-Sitz-Fahrzeug (1) gemäß Anspruch 4, wobei der äußere Bereich (Ro) weiterhin einen hinteren Abschnitt (Rb) aufweist, der weiter hinten angeordnet ist als das hintere Ende (65r) der Montage-Klammer (65) in der Vorder-Rück-Richtung des Fahrzeugs, in einer Draufsicht auf das Fahrzeug (1).

6. Ein Spreiz-Sitz-Fahrzeug (1) gemäß irgendeinem der Ansprüche 1 bis 3, wobei die Öffnung (O1) des Stau-Kastens (10) einen äußeren Bereich (Ro) aufweist, der weiter außen angeordnet ist als eine Innen-Kante (6i) des hinteren Rahmens (6) in Fahrzeug-Breiten-Richtung in einer Draufsicht auf das Fahrzeug (1), und
der äußere Bereich (Ro) einen hinteren Abschnitt (Rb) aufweist, der weiter hinten angeordnet ist als ein hinteres Ende (65r) der Montage-Klammer (65) in der Vorder-Rück-Richtung des Fahrzeugs in einer Draufsicht auf das Fahrzeug (1).

7. Ein Spreiz-Sitz-Fahrzeug (1) gemäß irgendeinem der Ansprüche 1 bis 6, wobei der obere End-Abschnitt (71) jeder hinteren Seiten-Abdeckung (32) unter dem Stau-Kasten (10) angeordnet ist in Aufwärts-Abwärts-Richtung des Fahrzeugs, so dass der Stau-Kasten (10) an dem Rahmen (2) befestigt und von diesem entfernt wird, während die hintere Seiten-Abdeckung (32) an dem Rahmen (2) befestigt ist.

8. Ein Spreiz-Sitz-Fahrzeug (1) gemäß irgendeinem der Ansprüche 1 bis 7, wobei ein Spalt (Gf, Gr, Gs) zwischen der Nut (72) von diesem einen der hinteren Seiten-Abdeckungen (32) und dem Montage-Abschnitt (61) des Stau-Kastens (10) schmaler ist als eine Länge (H1) des Montage-Abschnitts (61) in der Aufwärts-Abwärts-Richtung des Fahrzeugs.

9. Ein Spreiz-Sitz-Fahrzeug (1) gemäß irgendeinem der Ansprüche 1 bis 8, wobei der Flansch-Abschnitt (44) des des Stau-Kastens (10) einen Sockel-Abschnitt (46) beinhaltet, der mit dem Sitz (9) in Kontakt kommt, und
der Montage-Abschnitt (61) des Stau-Kastens (10) sich nach unten nach unten in der Aufwärts-Abwärts-Richtung des Fahrzeugs nach unten erstreckt.

10. Ein Spreiz-Sitz-Fahrzeug (1) gemäß Anspruch 9, wobei sich der Sockel-Abschnitt (46), der Montage-Abschnitt (61) und die Montage-Klammer (65) sich einander überlappen in einer Draufsicht auf das Fahrzeug (1).

11. Ein Spreiz-Sitz-Fahrzeug (1) gemäß irgendeinem der Ansprüche 1 bis 10, wobei der obere End-Abschnitt (71) von jeder hinteren Seiten-Abdeckung (32) einen Befestigungs-Abschnitt (73m, 73r) beinhaltet, der an dem Flansch-Abschnitt (44) der Stau-Kasten (10) befestigt ist.

## Revendications

1. Véhicule à enfourcher (1) comprenant :
un coffre de stockage (10) qui définit un espace de stockage (S1) où un article doit être disposé ;
un siège (9) qui est disposé au-dessus du coffre de stockage (10) en direction haut-bas du véhicule et ouvre et ferme une ouverture (O1) pourvue dans une extrémité supérieure de l'espace de stockage (S1) en tournant vers le haut et vers le bas par rapport au coffre de stockage (10) ;
un châssis (2) qui comprend une paire de châssis arrière (6) qui sont disposés sur un côté droit et un côté gauche du coffre de stockage (10) en direction droite-gauche du véhicule, respectivement, et un support de montage (65) qui ressort vers le haut depuis un châssis de la paire de châssis arrière (6) en direction haut-bas du véhicule et supporte le coffre de stockage (10) ; et
un carénage extérieur qui comprend une paire de carénages latéraux arrière (32) disposés sur le côté droit et le côté gauche de la paire de châssis arrière (6), respectivement, et un carénage central arrière (35) disposé entre la paire de carénages latéraux arrière (32),
dans lequel les carénages latéraux arrière (32) sont disposés sous le siège (9) dans une vue latérale du véhicule (1),
dans lequel chacun des carénages latéraux arrière (32) est disposé vers l'extérieur de la paire de châssis arrière (6) en direction de la largeur du véhicule et chevauche le coffre de stockage (10) et la paire de châssis arrière (6) dans la vue latérale du véhicule (1),
dans lequel le coffre de stockage (10) comprend une portion tubulaire (42) qui entoure l'espace de stockage (S1), une portion de bride (44) qui ressort d'une surface circonférentielle externe (42o) de la portion tubulaire (42), et une portion de montage (61) qui est disposée sur le support de montage (65),
**caractérisé en ce que**
la portion de montage (61) s'étend vers le bas depuis la portion de bride (44) en direction haut-bas du véhicule,
chacun des carénages latéraux arrière (32) comprend une portion terminale supérieure (71) qui chevauche la portion de bride (44) dans une vue en plan du véhicule (1) et une encoche (72) qui pénètre dans la portion terminale supérieure (71) en direction haut-bas du véhicule et est renfoncée vers l'extérieur en direction de la largeur du véhicule dans une vue en plan du véhicule (1), et
la portion de montage (61) est disposée à l'intérieur de l'encoche (72) d'un des carénages latéraux arrière (32) dans une vue en plan du véhicule (1).

2. Véhicule à enfourcher (1) selon la revendication 1, dans lequel la portion de montage (61) du coffre de stockage (10) est plus longue que le support de montage (65) du châssis (2) en direction haut-bas du véhicule.

3. Véhicule à enfourcher (1) selon la revendication 1 ou 2, dans lequel
le châssis (2) comprend en outre un élément d'entretoise arrière (8) qui s'étend depuis ledit un châssis de la paire de châssis arrière (6) vers ledit autre châssis de la paire de châssis arrière (6) et est disposé derrière le coffre de stockage (10) en direction avant-arrière du véhicule, et
la portion de montage (61) du coffre de stockage (10) comprend une extrémité inférieure (61L) qui est disposée plus bas que l'élément d'entretoise arrière (8) en direction haut-bas du véhicule.

4. Véhicule à enfourcher (1) selon l'une quelconque des revendications 1 à 3, dans lequel
l'ouverture (O1) du coffre de stockage (10) comprend une région externe (Ro) qui est disposée plus vers l'extérieur qu'un bord interne (6i) du châssis arrière (6) en direction de la largeur du véhicule dans une vue en plan du véhicule (1), et
la région externe (Ro) comprend une portion latérale (Ra) qui est disposée dans une position plus à l'arrière qu'une extrémité avant (65f) du support de montage (65) et plus en avant qu'une extrémité arrière (65r) du support de montage (65) en direction avant-arrière du véhicule dans une vue en plan du véhicule (1).

5. Véhicule à enfourcher (1) selon la revendication 4, dans lequel la région externe (Ro) comprend en outre une portion arrière (Rb) qui est disposée plus à l'arrière que l'extrémité arrière (65r) du support de montage (65) en direction avant-arrière du véhicule dans une vue en plan du véhicule (1).

6. Véhicule à enfourcher (1) selon l'une quelconque des revendications 1 à 3, dans lequel
l'ouverture (O1) du coffre de stockage (10) comprend une région externe (Ro) qui est disposée plus vers l'extérieur qu'un bord interne (6i) du châssis arrière (6) en direction de la largeur du véhicule dans une vue en plan du véhicule (1), et
la région externe (Ro) comprend une portion arrière (Rb) qui est disposée plus à l'arrière qu'une extrémité arrière (65r) du support de montage (65) en direction avant-arrière du véhicule dans une vue en plan du véhicule (1) .

7. Véhicule à enfourcher (1) selon l'une quelconque des revendications 1 à 6, dans lequel la portion terminale supérieure (71) de chaque carénage latéral arrière (32) est disposée sous le coffre de stockage (10) en direction haut-bas du véhicule de telle sorte que le coffre de stockage (10) est attaché sur le châssis (2) et détaché de celui-ci alors que les carénages latéraux arrière (32) sont attachés au châssis (2).

8. Véhicule à enfourcher (1) selon l'une quelconque des revendications 1 à 7, dans lequel un intervalle (Gf, Gr, Gs) entre l'encoche (72) dudit un des carénages latéraux arrière (32) et la portion de montage (61) du coffre de stockage (10) est plus étroit que la longueur (H1) de la portion de montage (61) en direction haut-bas du véhicule.

9. Véhicule à enfourcher (1) selon l'une quelconque des revendications 1 à 8, dans lequel
la portion de bride (44) du coffre de stockage (10) comprend une portion de socle (46) qui vient en contact avec le siège (9), et
la portion de montage (61) du coffre de stockage (10) s'étend vers le bas en direction haut-bas du véhicule depuis la portion de socle (46).

10. Véhicule à enfourcher (1) selon la revendication 9, dans lequel la portion de socle (46), la portion de montage (61) et le support de montage (65) se chevauchent mutuellement dans une vue en plan du véhicule (1).

11. Véhicule à enfourcher (1) selon l'une quelconque des revendications 1 à 10, dans lequel
la portion terminale supérieure (71) de chaque carénage latéral arrière (32) comprend une portion attachée (73m, 73r) qui est attachée à la portion de bride (44) du coffre de stockage (10).
